(19) Europäisches Patentamt
European Patent Office
Office européen des brevets

(11) **EP 4 696 969 A1**

## (12) EUROPEAN PATENT APPLICATION
published in accordance with Art. 153(4) EPC

(43) Date of publication:
**18.02.2026  Bulletin 2026/08**

(21) Application number: **24788530.4**

(22) Date of filing: **19.03.2024**

(51) International Patent Classification (IPC):
**F27D 1/00** (2006.01)     **F27D 21/00** (2006.01)

(52) Cooperative Patent Classification (CPC):
**F27D 1/00; F27D 21/00**

(86) International application number:
**PCT/JP2024/010726**

(87) International publication number:
**WO 2024/214500 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **13.04.2023  JP 2023065494**

(71) Applicant: NIPPON STEEL CORPORATION
**Chiyoda-ku
Tokyo 100-8071 (JP)**

(72) Inventors:
• **SHIOKAWA, Masato**
**Tokyo 100-8071 (JP)**
• **MARUYAMA, Kazuya**
**Tokyo 100-8071 (JP)**

(74) Representative: **Vossius & Partner**
**Patentanwälte Rechtsanwälte mbB
Siebertstrasse 3
81675 München (DE)**

## (54) FACILITY, FACILITY STATE MONITORING DEVICE, FACILITY STATE MONITORING METHOD, AND PROGRAM

(57)    In an electric arc furnace (1), an inner circumferential surface (6a) of a sidewall portion (6) is formed of a refractory. Further, in a member that forms the sidewall portion (6), optical fibers (121 to 122) included in optical fiber temperature sensors (111, 112) are embedded.

F I G. 1

**Description**

TECHNICAL FIELD

The present disclosure relates to a facility, a facility state monitoring device, a facility state monitoring method, and a program, and is particularly suitable for use in a facility in which molten metal is present during operation. This application is based upon and claims the benefit of priority of the prior Japanese Patent Application No. 2023-065494, filed on April 13, 2023, the entire contents of which are incorporated herein by reference.

BACKGROUND ART

In facilities that produce molten metal, such as electric arc furnaces and blast furnaces, molten metal is present inside during operation. This causes the inside of the facility to become very hot. Therefore, refractories such as firebricks are placed on an inner circumferential surface of the facility. The refractories are exposed to high-temperature molten metal as above, and thus they wear out as a result of erosion or peeling off of some of the refractories as the facility is used. Therefore, there is a demand for a technique to monitor the state of refractories.

There has been a technique described in Patent Literature 1 as a technique of this type. In the technique described in Patent Literature 1, the temperature of an inner circumferential surface of a furnace is calculated by solving a one-dimensional heat transfer inverse problem using measured values of two thermocouples embedded in a hearth wall of the blast furnace. Then, in the technique described in Patent Literature 1, the position at which the temperature calculated in this manner becomes the temperature that defines the inner circumferential surface of the furnace is calculated as the position of the inner circumferential surface of the furnace.

CITATION LIST

PATENT LITERATURE

Patent Literature 1: Japanese Laid-open Patent Publication No. 2001-234217

SUMMARY OF INVENTION

TECHNICAL PROBLEM

However, in the technique described in Patent Literature 1, the measured values of thermocouples embedded in the refractory beforehand are used. Therefore, the positions at which the temperature of the facility is measured are limited. Further, it is not easy to install new temperature sensors. Further, when increasing the number of positions at which temperature is measured, it is necessary to embed a large number of thermocouples in the refractory. However, it is practically difficult to embed a large number of thermocouples in the refractory.

The present disclosure has been made in consideration of the above problems, and an object thereof is to make it possible to measure temperatures over a wider range as the temperature of a sidewall portion of a facility in which molten metal is present during operation.

SOLUTION TO PROBLEM

The facility in the present disclosure is a facility in which molten metal is present during operation, in which an inner circumferential surface of a sidewall portion of the facility is formed of a refractory, and an optical fiber included in an optical fiber temperature sensor is embedded in a member forming the sidewall portion.

The facility state monitoring device in the present disclosure is a facility state monitoring device that monitors a state of the facility, the device including: an inverse problem analysis means that calculates a temperature distribution of the sidewall portion by performing a three-dimensional non-steady state heat transfer inverse problem analysis based on a measured value of a temperature sensor that measures a temperature of the sidewall portion; and a refractory position calculation means that calculates a position of the inner circumferential surface based on the temperature distribution calculated by the inverse problem analysis means, in which the inverse problem analysis means calculates a temperature distribution of the sidewall portion in a thickness direction, the position of the inner circumferential surface to be calculated by the refractory position calculation means includes a position of the sidewall portion in the thickness direction, the temperature sensor measures a temperature at a position of the sidewall portion on a relatively inner circumferential surface side and a temperature at a position of the sidewall portion on a relatively outer circumferential surface side in a portion of the sidewall portion that is different from the inner circumferential surface of the sidewall portion, and the temperature sensor that measures at least the temperature at the position of the sidewall portion on the relatively inner circumferential surface side out of the temperature at the position of the sidewall portion on the relatively inner circumferential surface side and the temperature at the position of the sidewall portion on the relatively outer circumferential surface side is the optical fiber temperature sensor.

The facility state monitoring method in the present disclosure is a facility state monitoring method that monitors a state of the facility, the method includes: an inverse problem analysis step that calculates a temperature distribution of the sidewall portion by performing a three-dimensional non-steady state heat transfer inverse problem analysis based on a measured value of a temperature sensor that measures a temperature of the sidewall portion; and a refractory position calculation step that calculates a position of the inner circumferential surface based on the temperature distribution calculated by the inverse problem analysis step, in which the inverse problem analysis step calculates a temperature distribution of the sidewall portion in a thickness direction, the position of the inner circumferential surface to be calculated in the refractory position calculation step includes a position of the sidewall portion in the thickness direction, the temperature sensor measures a temperature at a position of the sidewall portion on a relatively inner circumferential surface side and a temperature at a position of the sidewall portion on a relatively outer circumferential surface side in a portion of the sidewall portion that is different from the inner circumferential surface of the sidewall portion, and out of the temperature at the position of the sidewall portion on the relatively inner circumferential surface side and the temperature at the position of the sidewall portion on the relatively outer circumferential surface side, is at least the optical fiber temperature sensor.

The program in the present disclosure is a program for causing a computer to function as each means of the facility state monitoring device.

BRIEF DESCRIPTION OF DRAWINGS

[Fig. 1] Fig. 1 is a view illustrating an example of a configuration of an electric arc furnace.
[Fig. 2] Fig. 2 is a cross-sectional view taken along the line I-I in Fig. 1.
[Fig. 3] Fig. 3 is a view illustrating an example of a configuration of a precast block in which optical fibers are embedded.
[Fig. 4A] Fig. 4A is a view conceptually explaining a first example of heat transfer that can be considered in a one-dimensional non-steady state heat transfer inverse problem.
[Fig. 4B] Fig. 4B is a view conceptually explaining a second example of the heat transfer that can be considered in the one-dimensional non-steady state heat transfer inverse problem.
[Fig. 5A] Fig. 5A is a view conceptually explaining a first example of heat transfer that can be considered in a three-dimensional non-steady state heat transfer inverse problem.
[Fig. 5B] Fig. 5B is a view conceptually explaining a second example of the heat transfer that can be considered in the three-dimensional non-steady state heat transfer inverse problem.
[Fig. 6] Fig. 6 is a diagram illustrating an example of a functional configuration of a facility state monitoring device.
[Fig. 7] Fig. 7 is a view explaining an example of a hot spot region.
[Fig. 8A] Fig. 8A is a view illustrating a first example of positions of temperatures to be acquired when performing the three-dimensional non-steady state heat transfer inverse problem analysis.
[Fig. 8B] Fig. 8B is a view illustrating a second example of the positions of the temperatures to be acquired when performing the three-dimensional non-steady state heat transfer inverse problem analysis.
[Fig. 9A] Fig. 9A is a view illustrating an example of a region including a worn-out portion when a sidewall portion is viewed from above.
[Fig. 9B] Fig. 9B is a view illustrating an example of the region including the worn-out portion when the sidewall portion is viewed from the center axis side of the electric arc furnace.
[Fig. 10] Fig. 10 is a flowchart explaining an example of a facility state monitoring method.
[Fig. 11A] Fig. 11A is a view illustrating a first example of the relationship between a refractory temperature and a refractory thickness direction distance.
[Fig. 11B] Fig. 11B is a view illustrating a second example of the relationship between the refractory temperature and the refractory thickness direction distance.
[Fig. 12] Fig. 12 is a diagram illustrating an example of a configuration of hardware of the facility state monitoring device.

DESCRIPTION OF EMBODIMENTS

Hereinafter, there will be explained an embodiment of the present disclosure with reference to the drawings. Incidentally, the fact that objects to be compared such as lengths, positions, sizes, and intervals, are the same includes the case where they are strictly the same, as well as the case where they are different within a range that does not depart from the gist of the present disclosure (for example, the case where they are different within a tolerance range defined at the time of design). Further, in each of the drawings, for convenience of explanation and notation, some of the configuration will be omitted or simplified.

A later-described facility state monitoring device 100 in this embodiment monitors the state of an inner circumferential surface of a sidewall portion of a facility in which molten metal is present during operation. The inner circumferential surface of the sidewall portion of the facility is a surface that is in contact with the space in which molten metal can be present (for example, the surface facing the center axis (center line) of the facility). The inner circumferential surface of the sidewall portion of the facility is formed of a refractory. In this embodiment, an arc melting furnace, which is a type of electric arc furnace, is explained as an example of such a facility. However, the facility to be monitored by the facility state monitoring device 100 is not limited. In the arc melting furnace, a raw material such as scrap is charged into the furnace for each one charge (ch). Then, the raw material is melted and fused by arcs generated from arc electrodes. Thereby, molten metal (for example, molten steel) and molten slag are produced. Incidentally, in this embodiment, the period from the timing at which the raw material is charged into the furnace to when the molten metal and the molten slag are discharged out of the furnace is referred to as a charge. The sidewall portion of the arc melting furnace is exposed to high temperatures. Therefore, refractories such as firebricks are used to construct the sidewall portion of the arc melting furnace. As described previously, the facility to be monitored by the facility state monitoring device 100 is not limited to the arc melting furnace. For example, the facility to be monitored by the facility state monitoring device 100 may be an electric arc furnace other than the arc melting furnace, or an industrial furnace such as a blast furnace or a converter.

<Facility>

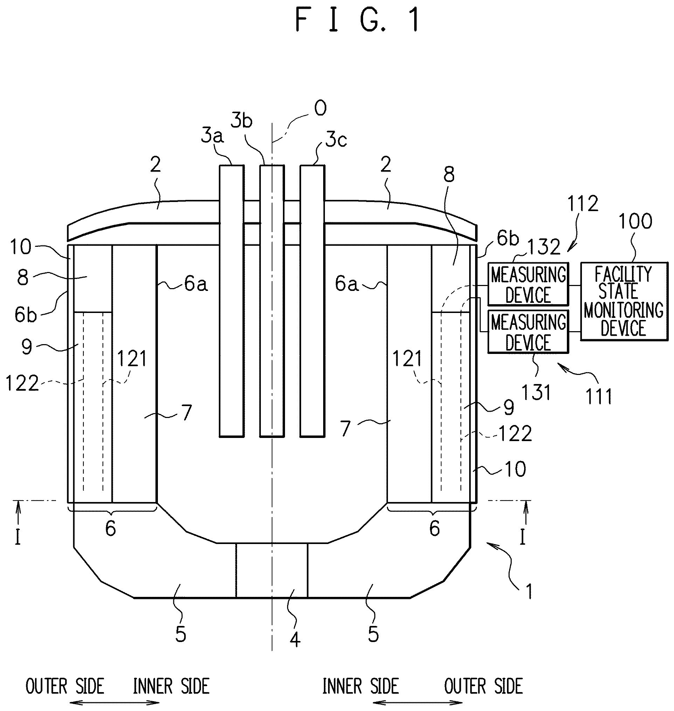

Fig. 1 is a view illustrating an example of a configuration of an electric arc furnace 1. Incidentally, Fig. 1 is a vertical cross-sectional view of the electric arc furnace 1. For convenience of notation and explanation, hatching indicating cut surfaces is omitted in Fig. 1.

In Fig. 1, this embodiment explains, as an example, the case where the electric arc furnace 1 includes an upper lid 2, arc electrodes 3a to 3c, a furnace bottom electrode 4, a furnace bottom portion 5, and a sidewall portion 6.

Fig. 1 illustrates, as an example, the case where the electric arc furnace 1 includes the three arc electrodes 3a to 3c. Further, Fig. 1 illustrates, as an example, the case where the three arc electrodes 3a to 3c are installed at equal intervals (120° intervals) around a center axis (center line) O of the electric arc furnace 1. Incidentally, in the following explanation, the direction around the center axis (center line) O of the electric arc furnace 1 is referred to as a circumferential direction as necessary. Further, in the following explanation, the center axis (center line) O of the electric arc furnace 1 is abbreviated to a center axis O as necessary.

Further, in Fig. 1, this embodiment explains, as an example, the case where the sidewall portion 6 is installed so as to surround the center axis O. Further, this embodiment explains, as an example, the case where the sidewall portion 6 includes a wear brick 7, a permanent brick 8, a precast block 9, and a furnace shell 10.

Firebricks are used to form the wear brick 7. Of the surfaces of the wear brick 7, the surface facing the center axis O side forms an inner circumferential surface 6a of the sidewall portion 6 of the electric arc furnace 1. In the following explanation, the inner circumferential surface 6a side of the sidewall portion 6 of the electric arc furnace 1 is referred to as an inner side as necessary. Incidentally, the inner side is the side closer to the center axis O of the electric arc furnace 1. Further, the side opposite to the inner side is referred to as an outer side as necessary. Incidentally, the outer side is the outer circumferential surface 6b side of the sidewall portion 6 of the electric arc furnace 1 (the side farther from the center axis O of the electric arc furnace 1).

Firebricks are used to form the permanent brick 8. The permanent brick 8 is installed on the outer side relative to the wear brick 7. Incidentally, the outer end of the wear brick 7 and the inner end of the permanent brick 8 are connected (fixed) to each other via a heat-resistant and adhesive material, for example. The heat-resistant and adhesive material is mortar, for example.

The furnace shell 10 is installed on the outer side relative to the permanent brick 8. The furnace shell 10 forms the outer circumferential surface 6b of the sidewall portion 6 of the electric arc furnace 1. The inner end of the furnace shell 10 and the outer end of the permanent brick 8 are connected (fixed) to each other via a heat-resistant and adhesive material, for example. The heat-resistant and adhesive material is mortar, for example.

The above configuration of the electric arc furnace is the configuration of a general electric arc furnace. The configuration of the electric arc furnace is not limited to the above configuration of the electric arc furnace. In the electric arc furnace 1 in this embodiment, the precast block 9 is installed in a partial region of the region where the permanent brick 8 is installed in such a general electric arc furnace. The precast block 9 is an example of a precast refractory block. As will be described later, this embodiment explains, as an example, the case where the precast block 9 is fabricated by a monolithic refractory being precast with optical fibers included in optical fiber temperature sensors embedded therein.

In the electric arc furnace 1 illustrated in Fig. 1 as an example, when scrap being the raw material melts down, the sidewall portion 6 becomes extremely hot locally due to radiant heat generated by arc discharge or another reason. Therefore, the temperature distribution of the sidewall portion 6 on a virtual plane parallel to the inner circumferential surface 6a has the maximum value (local maximum value) locally. In the following explanation, such a position at which temperature reaches a maximum locally is referred to as a hot spot as necessary. Incidentally, in the electric arc furnace (arc melting furnace) including the arc electrodes 3a to 3c, there are at least as many hot spots as there are arc electrodes on one virtual plane parallel to the inner circumferential surface 6a (in the example illustrated in Fig. 1, there are at least three hot spots).

This embodiment explains, as an example, the case where the precast block 9 is installed so as to satisfy all of the following (A) to (D).

(A) The position of the outer end of the precast block 9 is the same position as the outer end of the permanent brick 8, or is a position inward relative to the outer end of the permanent brick 8.
(B) The position of the inner end of the precast block 9 is the same position as the inner end of the permanent brick 8, or is a position outward relative to the inner end of the permanent brick 8.
(C) The position of a region where a hot spot is expected to occur in the circumferential direction is included in the position of the precast block 9 in the circumferential direction.
(D) The position of a region where a hot spot is expected to occur in the height direction is included in the position of the precast block 9 in the height direction.

The precast block 9 is used in order to install a temperature sensor, which is intended for measuring the temperature of the sidewall portion 6, in the sidewall portion 6. This embodiment explains, as an example, the case where optical fiber temperature sensors are used as the temperature sensor that measures the temperature of the sidewall portion 6. Fig. 1 illustrates, as an example, the case where optical fiber temperature sensors 111 to 112 include optical fibers 121 to 122 and measuring devices 131 to 132 in this embodiment. The measuring devices 131 to 132 output light (for example, infrared light) into the optical fibers 121 to 122. The light output into the optical fibers 121 to 122 is scattered in the optical fibers 121 to 122. The measuring devices 131 to 132 receive the returned light scattered in the optical fibers 121 to 122. The measuring devices 131 to 132 calculate the temperature at each position in the optical fibers 121 to 122 based on the intensity, velocity, and time of the input and output light. The optical fiber temperature sensors 111 to 112 themselves are fabricated by well-known techniques, and thus a detailed explanation of the optical fiber temperature sensors 111 to 112 is omitted here.

The Optical fibers 121 to 122 are embedded in the precast block 9. The optical fiber 121 is installed at a relatively inner position so that both the temperature distribution of the sidewall portion 6 in the height direction and the temperature distribution of the sidewall portion 6 in the circumferential direction can be measured. The optical fiber 122 is installed at a relatively outer position so that both the temperature distribution of the sidewall portion 6 in the height direction and the temperature distribution of the sidewall portion 6 in the circumferential direction can be measured. In the following explanation, the optical fiber to be installed at a relatively inner position is referred to as an inner optical fiber as necessary. Further, the optical fiber to be installed at a relatively outer position is referred to as an outer optical fiber as necessary. Further, the height direction of the sidewall portion 6 and the circumferential direction of the sidewall portion 6 are abbreviated to a height direction and a circumferential direction, respectively, as necessary.

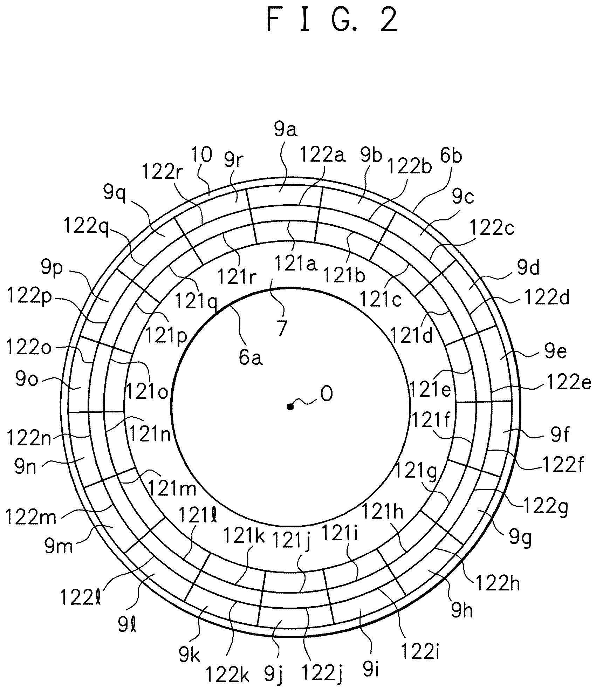

Fig. 2 is a cross-sectional view taken along the I-I line in Fig. 1. Incidentally, for convenience of notation and explanation, hatching indicating cut surfaces is omitted also in Fig. 2. As illustrated in Fig. 2, this embodiment explains, as an example, the case where the electric arc furnace 1 includes a plurality of precast blocks 9a to 9r. The plural precast blocks 9a to 9r are arranged in the circumferential direction of the electric arc furnace 1. This embodiment explains, as an example, the case where the plural precast blocks 9a to 9r have the same configuration. However, at least one of the plural precast blocks 9a to 9r may be different in shape and size from the other precast blocks. The physical property value of at least one of the plural precast blocks 9a to 9r (namely, the material that forms the precast block) may also be different from the other precast blocks. However, it is preferable that the physical property values of the plural precast blocks 9a to 9r should be substantially the same, and it is more preferable that they should be the same. This is because there is no need to vary the physical property value of the precast block to be used when performing a later-described three-dimensional non-steady state heat transfer inverse problem analysis depending on the position.

Of the precast blocks 9a to 9r, ends in the circumferential direction of two precast blocks (for example, the precast blocks 9a to 9b) adjacent to each other in the circumferential direction are connected (fixed) to each other via a heat-resistant and adhesive material, for example. Further, the outer end of the wear brick 7 and the inner ends of the precast blocks 9a to 9r are also connected (fixed) to each other via a heat-resistant and adhesive material, for example. Further, the inner end of the furnace shell 10 and the outer ends of the precast blocks 9a to 9r are also connected (fixed) to each other via a heat-resistant and adhesive material, for example. The material (heat-resistant and adhesive material) used to connect (fix) the precast blocks 9a to 9r in the above manner is mortar, for example.

As illustrated in Fig. 2, this embodiment explains, as an example, the case where inner optical fibers 121a to 121r and outer optical fibers 122a to 122r are installed in the precast blocks 9a to 9r, respectively. Further, this embodiment explains, as an example, the case where the inner optical fibers 121a to 121r have the same configuration. Further, this embodiment explains, as an example, the case where the outer optical fibers 122a to 122r have the same configuration. Further, this embodiment explains, as an example, the case where the arrangement of the inner optical fibers 121a to 121r and the arrangement of the outer optical fibers 122a to 122r are the same relatively in the precast blocks 9a to 9r respectively. As described previously, this embodiment explains, as an example, the case where the precast blocks 9a to 9r have the same configuration. Therefore, in a relative coordinate system with a reference position (for example, the position of the center of gravity) of each of the precast blocks 9a to 9r set as the origin, the coordinates of the positions at which the inner optical fibers 121a to 121r and the outer optical fibers 122a to 122r are present are the same. That is, this embodiment explains, as an example, the case where the precast blocks 9a to 9r have the same configuration, including the inner optical fibers 121a to 121r and the outer optical fibers 122a to 122r. Further, this embodiment explains, as an example, the case where even if at least any two of the precast blocks 9a to 9r are replaced, the state after the replacement is the same as that before the replacement.

Incidentally, the precast block 9 illustrated in Fig. 1 is one of the precast blocks 9a to 9r. In the following explanation, when the precast blocks 9a to 9r are explained without being limited to the individual precast blocks 9a to 9r, 9 is used as the reference numeral for the precast blocks. Further, the inner optical fiber 121 and the outer optical fiber 122 illustrated in Fig. 1 are one of the inner optical fibers 121a to 121r and one of the outer optical fibers 122a to 122r respectively. When the inner optical fibers 121a to 121r and the outer optical fibers 122a to 122r are explained without being limited to the individual inner optical fibers 121a to 121r and the individual outer optical fibers 122a to 122r, 121 and 122 are used as the reference numerals for the inner optical fibers and the outer optical fibers, respectively.

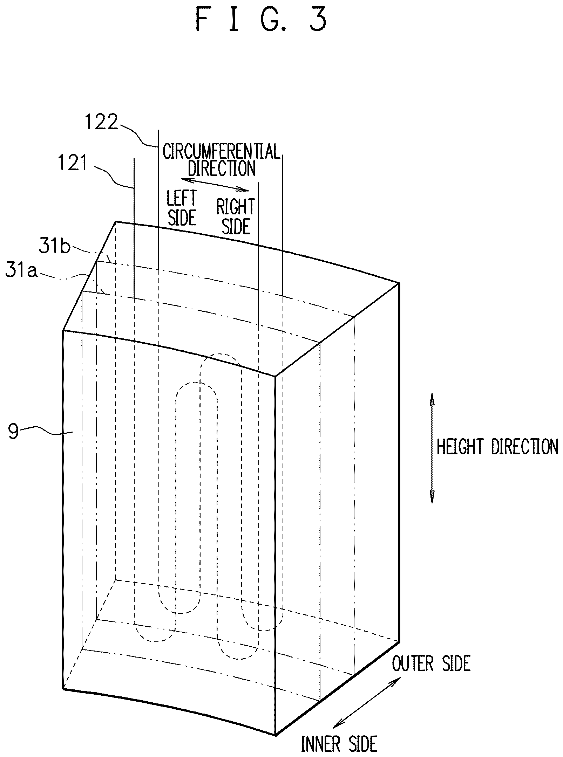

Fig. 3 is a view illustrating an example of the configuration of the precast block 9 in which the inner optical fiber 121 and the outer optical fiber 122 are embedded.

As described previously, the inner optical fiber 121 is installed relatively inward. The outer optical fiber 122 is installed relatively outward.

As illustrated in Fig. 3, this embodiment explains, as an example, the case where the inner optical fiber 121 is installed on a virtual plane 31a to meander in the circumferential direction as its traveling direction. The virtual plane 31a is a plane parallel to the inner circumferential surface 6a of the sidewall portion 6. When installing the inner optical fiber 121 in this manner, the inner optical fiber 121 is installed so that the position of the region where the previously-described hot spot is expected to occur in the height direction is included within a range of the region where the inner optical fiber 121 meanders in the height direction.

Similarly, this embodiment explains, as an example, the case where the outer optical fiber 122 is installed on a virtual plane 31b to meander in the circumferential direction as its traveling direction. The virtual plane 31b is a plane parallel to the inner circumferential surface 6a of the sidewall portion 6. When installing the outer optical fiber 121 in this manner, the outer optical fiber 122 is installed so that the position of the region where the previously-described hot spot is expected to occur in the height direction is included within a range of the region where the outer optical fiber 122 meanders in the height direction.

In the following explanation, the regions in the virtual planes 31a and 31b where the optical fibers 121 and 122 are installed respectively are referred to as installation regions of the optical fibers 121 and 122, as necessary.

Incidentally, for simplicity of notation and explanation, Fig. 3 illustrates, as an example, the case where the shape of the precast block 9 is a rectangular cylinder with a hollow fan-shaped bottom. However, the shape of the precast block 9 is not limited to such a shape. For example, the shape of the precast block 9 may be a rectangular parallelepiped.

As illustrated in Fig. 3, both ends of the inner optical fiber 121 and the outer optical fiber 122 are pulled out to the outside of the precast block 9. The inner optical fibers 121a to 121r are connected in series. The outer optical fibers 122a to 122r are also connected in series. One end of the serially connected inner optical fibers 121a to 121r is connected to the measuring device 131 illustrated in Fig. 1. The other end of the serially connected inner optical fibers 121a to 121r may be embedded in the precast block 9, or may also be pulled out to the outside of the precast block 9. One end of the serially connected outer optical fibers 122a to 122r is connected to the measuring device 132 illustrated in Fig. 1. Similarly, the other end of the serially connected outer optical fibers 122a to 122r may be embedded in the precast block 9, or may also be pulled out to the outside of the precast block 9.

An example of the method of connecting the remaining end of the inner optical fiber 121 embedded in the precast block 9 is as follows. In the following explanation, the right side and the left side in the circumferential direction when the sidewall portion 6 (the precast block 9) is viewed from the center axis O of the electric arc furnace 1 with the upper direction of the electric arc furnace 1 in the height direction being the upward direction are referred to simply as a right side and a left side, respectively (see "circumferential direction," "right side," and "left side" in Fig. 3).

Of the both ends of the inner optical fiber 121 embedded in the precast block 9, the end pulled out from the right side is mutually connected to the end pulled out from the left side of the both ends of the inner optical fiber 121 embedded in the precast block 9 adjacent on the right side of the precast block 9. For example, in Fig. 2, of the both ends of the inner optical fiber 121a embedded in the precast block 9a, the end pulled out from the right side is mutually connected to the end pulled out from the left side of the both ends of the inner optical fiber 121b embedded in the precast block 9b adjacent on the right side of the precast block 9a.

Of the both ends of the inner optical fiber 121 embedded in the precast block 9, the end pulled out from the left side is mutually connected to the end pulled out from the right side of the both ends of the inner optical fiber 121 embedded in the precast block 9 adjacent on the left side of the precast block 9. For example, in Fig. 2, of the both ends of the inner optical fiber 121a embedded in the precast block 9a, the end pulled out from the left side is mutually connected to the end pulled out from the right side of the both ends of the inner optical fiber 121r embedded in the precast block 9r adjacent on the left side of the precast block 9a.

By configuring and installing the inner optical fibers 121a to 121r as described above, the inner optical fibers 121a to 121r are installed so as to surround the center axis O of the electric arc furnace 1 while meandering on the virtual plane 31a in the circumferential direction as their traveling direction.

Similarly, of the both ends of the outer optical fiber 122 embedded in the precast block 9, the end pulled out from the right side is mutually connected to the end pulled out from the left side of the both ends of the outer optical fiber 122 embedded in the precast block 9 adjacent on the right side of the precast block 9. For example, in Fig. 2, of the both ends of the outer optical fiber 122a embedded in the precast block 9a, the end pulled out from the right side is mutually connected to the end pulled out from the left side of the both ends of the outer optical fiber 122b embedded in the precast block 9b adjacent on the right side of the precast block 9a.

Of the both ends of the outer optical fiber 122 embedded in the precast block 9, the end pulled out from the left side is mutually connected to the end pulled out from the right side of the both ends of the outer optical fiber 122 embedded in the precast block 9 adjacent on the left side of the precast block 9. For example, in Fig. 2, of the both ends of the outer optical fiber 122a embedded in the precast block 9a, the end pulled out from the left side is mutually connected to the end pulled out from the right side of the both ends of the outer optical fiber 122r embedded in the precast block 9r adjacent on the left side of the precast block 9a.

By configuring and installing the outer optical fibers 122a to 122r as described above, the outer optical fibers 122a to 122r are installed so as to surround the center axis O of the electric arc furnace 1 while meandering on the virtual plane 31b in the circumferential direction as their traveling direction.

Incidentally, as above, this embodiment explains, as an example, the case where the optical fiber temperature sensor 111, which measures the temperature at a relatively inner position, and the optical fiber temperature sensor 112, which measures the temperature at a relatively outer position, are different temperature sensors. However, this embodiment does not necessarily need to be designed in this manner. For example, both the temperature at a relatively inner position and the temperature at a relatively outer position may be measured by a single optical fiber temperature sensor. In this case, a single optical fiber may be installed in the region where the optical fibers 121 and 122 are installed.

The precast block 9 is manufactured as follows, for example.

A monolithic refractory is placed in a formwork having a shape and size corresponding to the outer shape of the precast block 9. Then, before the monolithic refractory hardens, the inner optical fiber 121 and the outer optical fiber 122 are placed in the formwork so as to be embedded in the previously-described positions in the precast block 9. The monolithic refractory is made to harden (dry) with the inner optical fiber 121 and the outer optical fiber 122 placed in the formwork. It is preferable that the positions in the inner optical fiber 121 and the outer optical fiber 122 in the precast block 9 (coordinates in the relative coordinate system described previously) should be identified even in a state where they are embedded in the precast block 9. Therefore, for example, a notillustrated jig that holds the inner optical fiber 121 and the outer optical fiber 122 outside the formwork is used, and thereby it is preferable to inhibit the positions of the inner optical fiber 121 and the outer optical fiber 122 from changing (it is preferable not to change their positions) in the precast block 9 from the time when the inner optical fiber 121 and the outer optical fiber 122 are placed in the formwork until the monolithic refractory hardens.

For example, a jig having a configuration that allows adjustment of the position of a target to be held in the formwork so that the position of the target to be held in the formwork can be identified may be used. With such a jig attached, the inner optical fiber 121 and the outer optical fiber 122 are placed in the formwork. Then, the jig is adjusted, to thereby set the positions of the inner optical fiber 121 and the outer optical fiber 122 at predetermined positions in the formwork. Thereafter, the jig maintains the positions of the inner optical fiber 121 and the outer optical fiber 122 in the precast block 9 until the monolithic refractory hardens.

Incidentally, after the inner optical fiber 121 and the outer optical fiber 122 are placed in the formwork, the monolithic refractory may be placed in the formwork.

Further, as the material for the monolithic refractory, there is used a material that achieves the following: the precast block 9 has a mechanical strength required for the sidewall portion 6, and the heat resistance of the precast block 9 satisfies the heat resistance required for the sidewall portion 6.

Further, the lengths of the inner optical fiber 121 and the outer optical fiber 122 pulled out from the precast block 9 can be identified even when they are embedded in the precast block 9. Therefore, once each position in the inner optical fiber 121 and each position in the outer optical fiber 122 in the precast block 9 have been identified, the lengths from the measuring devices 131 to 132 to each position in the inner optical fiber 121 and each position in the outer optical fiber 122 are also identified.

Incidentally, this embodiment explains, as an example, the case where all of the following (E) to (G) are satisfied.

(E) The distances from the inner circumferential surface 6a of the sidewall portion 6 to the inner optical fibers 121a to 121r are constant.

(F) The distances from the inner circumferential surface 6a of the sidewall portion 6 to the outer optical fibers 122a to 122r are constant.

(G) The spacings between the inner optical fibers 121a to 121r and the outer optical fibers 122a to 122r (the distance of the sidewall portion 6 in the thickness direction) are constant.

This is preferable because it reduces the calculation load of temperature interpolation calculations using the temperatures measured by the optical fiber temperature sensors 111 to 112 or another calculation, in the later-described facility state monitoring device 100. However, this embodiment does not necessarily need to be designed in this manner as long as the lengths from the measuring devices 131 to 132 to the respective positions in the inner optical fiber 121 and the outer optical fiber 122 are identified.

Further, when the inner optical fiber and the outer optical fiber (for example, the inner optical fiber 121a and the outer optical fiber 122a) whose positions in the circumferential direction are the same are embedded in the same precast block 9, installation of the inner optical fiber 121 and the outer optical fiber 122 is facilitated, which is preferable. However, this embodiment does not necessarily need to be designed in this manner. For example, the inner optical fiber and the outer optical fiber whose positions in the circumference direction are the same may be embedded in different precast blocks. Further, as long as the positions of the inner optical fiber and the outer optical fiber (for example, the inner optical fiber 121a and the outer optical fiber 122a) in the circumference direction are the same, the calculation load when performing the later-described three-dimensional non-steady state heat transfer inverse problem analysis can be reduced, which is preferable. However, the positions of the inner optical fiber and the outer optical fiber (for example, the inner optical fiber 121a and the outer optical fiber 122a) in the circumference direction do not need to be the same.

Further, a temperature sensor other than the optical fiber temperature sensor may be used instead of the optical fiber temperature sensor 112. The temperature sensor other than the optical fiber temperature sensor does not need to be embedded in the sidewall portion 6. The temperature sensor other than the optical fiber temperature sensor may be, for example, a temperature sensor that measures the temperature distribution on the outer surface of the furnace shell 10. Such a temperature sensor may be a radiation thermometer or a thermocouple. Further, such a temperature sensor is installed at an outer position relative to the optical fiber temperature sensor (optical fiber) so as to be able to measure both the temperature distribution of the sidewall portion 6 in the height direction and the temperature distribution of the sidewall portion 6 in the circumferential direction. Further, such a temperature sensor is installed at a position that enables the temperature of a region where the previously-described hot spot is expected to occur to be measured.

In addition, a permanent brick may further be installed on the outer side of the permanent brick 8. In this case, the precast block 9 in which the inner optical fiber 121 and the outer optical fiber 122 are embedded is preferably installed in a partial region of the region where the permanent brick 8 closest to the furnace shell 10 is installed. For example, this is because installation and maintenance of the precast block 9 in which the inner optical fiber 121 and the outer optical fiber 122 are embedded are facilitated. However, the precast block 9 in which the inner optical fiber 121 and the outer optical fiber 122 are embedded may be installed in a partial region of the region where a permanent brick other than the permanent brick closest to the furnace shell 10 is installed. Incidentally, the wear brick 7 forms the inner circumferential surface 6a of the sidewall portion 6 of the electric arc furnace 1. For this reason, there is a risk that the thickness of the wear brick 7 may decrease due to erosion or the like. Therefore, it is preferable that the precast block 9 in which the inner optical fiber 121 and the outer optical fiber 122 are embedded should not form the inner circumferential surface 6a of the sidewall portion 6 of the electric arc furnace 1. For example, it is preferable that the precast block 9 in which the inner optical fiber 121 and the outer optical fiber 122 are embedded should not be installed in the region where the wear brick 7 is installed. In this case, the precast block 9 in which the inner optical fiber 121 and the outer optical fiber 122 are embedded is installed, for example, in the region where the permanent brick, which is a refractory that does not form the inner circumferential surface 6a of the sidewall portion 6 of the electric arc furnace 1, is installed.

<Outlines of the facility state monitoring device and the facility state monitoring method>

As will be described in detail later, the facility state monitoring device 100 in this embodiment calculates the temperature distribution of the sidewall portion 6 in the thickness direction by performing the three-dimensional non-steady state heat transfer inverse problem analysis based on the measured values of the optical fiber temperature sensors 111 to 112. Incidentally, the temperature distribution of the sidewall portion 6 in the thickness direction is information indicating the relationship between the position of the sidewall portion 6 in the thickness direction and the temperature of the sidewall portion 6. Further, the facility state monitoring device 100 may further calculate the temperature distributions in other directions (for example, the height direction and the circumferential direction). Incidentally, the temperature distribution of the sidewall portion 6 in the thickness direction is calculated in a range assumed to be the range where the inner circumferential surface 6a of the sidewall portion 6 can be present. In other words, the temperature distribution of the sidewall portion 6 in the thickness direction can include temperatures in the region inside the furnace in addition to the region where the sidewall portion 6 is present actually.

Then, the facility state monitoring device 100 calculates the position of the inner circumferential surface 6a based on the temperature distribution of the sidewall portion 6 in the thickness direction. The position of the inner circumferential surface 6a calculated by the facility state monitoring device 100 includes the position of the sidewall portion 6 in the thickness direction. Incidentally, the thickness direction of the sidewall portion 6 is the direction in which a straight line connecting the inner circumferential surface 6a and the outer circumferential surface 6b at the shortest distance extends (the radial direction of the electric arc furnace 1). The position of the sidewall portion 6 in the thickness direction is represented, for example, by the value of a coordinate axis when the straight line is set as the coordinate axis. In the following explanation, the thickness direction of the sidewall portion 6 is abbreviated to a thickness direction as necessary.

Here, the non-steady state heat transfer inverse problem, which is a problem based on a non-steady state heat conduction equation that dominates a calculation area, refers to a problem of estimating at least one of boundary conditions of physical quantities (such as temperature and heat flux) at an area boundary and initial conditions of the physical quantities at the area boundary, with temperature information inside the area having been known. In this embodiment, the non-steady state heat transfer inverse problem is a problem of estimating the temperature at the area boundary (the temperature of the inner circumferential surface 6a). Incidentally, a non-steady state heat transfer forward problem refers to a problem of estimating the temperature information inside the area based on the known boundary conditions.

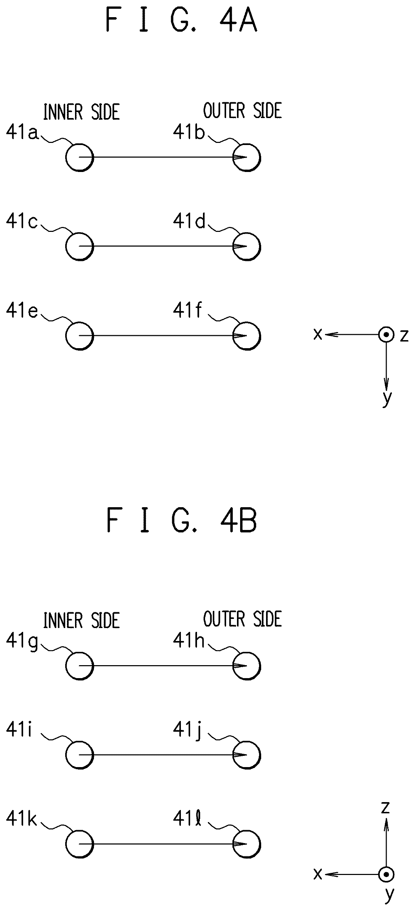

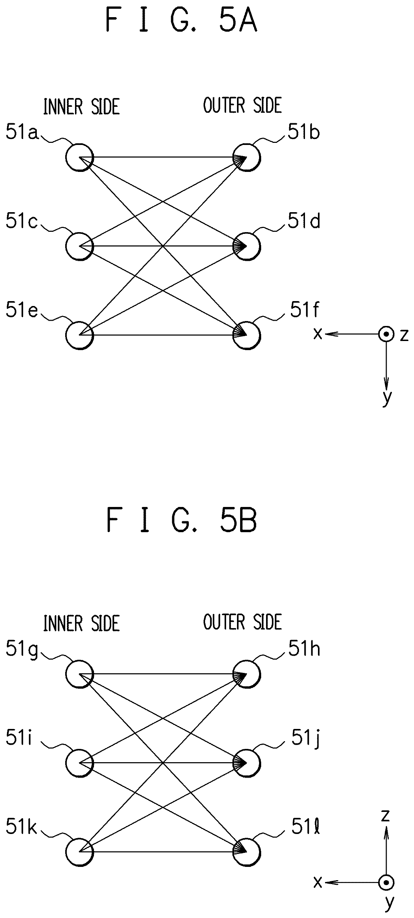

As described above, Patent Literature 1 has disclosed solving a one-dimensional non-steady state heat transfer inverse problem. However, when the one-dimensional non-steady state heat transfer inverse problem is used, it is not possible to sufficiently improve the accuracy of estimating the temperature distribution of the sidewall portion 6 in the thickness direction. This will be explained with reference to Fig. 4A, Fig. 4B, Fig. 5A, and Fig. 5B. Fig. 4A and Fig. 4B are views explaining an example of heat transfer that can be considered in the one-dimensional non-steady state heat transfer inverse problem. Fig. 5A and Fig. 5B are views explaining an example of heat transfer that can be considered in a three-dimensional non-steady state heat transfer inverse problem.

As will be described later, this embodiment explains, as an example, the case where the three-dimensional non-steady state heat transfer inverse problem is formulated in a three-dimensional orthogonal coordinate system (x-y-z coordinate system). Therefore, x-y-z coordinates are illustrated in each of the drawings. However, the origin of the x-y-z coordinates illustrated in each of the drawings is not limited to the position illustrated in each of the drawings. Further, in each of the drawings, the symbol with a black circle inside a white circle indicates an arrow line from a far side toward a near side of the paper sheet (the direction from a far side toward a near side of the paper sheet indicates the coordinate axis in a positive direction).

Here, the x-axis direction corresponds to the thickness direction. The y-axis direction corresponds to the circumferential direction. The z-axis direction corresponds to the height direction. Incidentally, in this embodiment, the inner circumferential surface 6a of the sidewall portion 6 is not a flat surface. Therefore, this embodiment explains, as an example, the case where the circumferential direction and the height direction of the sidewall portion 6, which appears as a flat surface by cutting and developing the sidewall portion 6 along the height direction at one point in the circumferential direction, are set as the y-axis direction and the z-axis direction, respectively, and the y-coordinate and the z-coordinate of each position of the sidewall portion 6 are determined. Similarly, this embodiment explains, as an example, the case where the y-coordinate and the z-coordinate of each position of the sidewall portion 6 are determined also in a plane parallel to the inner circumferential surface 6a (for example, the virtual planes 31a and 31b or the like) in the same manner as the inner circumferential surface 6a.

In Fig. 4A and Fig. 4B, the heat flux flows from the inner side, where temperature is higher, to the outer side. In the case of using the one-dimensional non-steady state heat transfer inverse problem, the temperature distribution of the sidewall portion 6 in the thickness direction is calculated assuming that heat transfers only in the thickness direction (x-axis direction) of the sidewall portion 6.

Therefore, when solving the one-dimensional non-steady state heat transfer inverse problem to calculate the temperature distribution of the sidewall portion 6 in the thickness direction, as illustrated in Fig. 4A and Fig. 4B, temperature measurement positions 41a to 41b, 41c to 41d, 41e to 41f, 41g to 41h, 41i to 41j, and 41k to 41l are located so as to be aligned in the thickness direction of the sidewall portion 6. In this case, the direction of heat transfer that can be considered in the non-steady state heat transfer inverse problem is limited to the direction in which the temperature measurement positions 41a to 41b, 41c to 41d, 41e to 41f, 41g to 41h, 41i to 41j, and 41k to 41l are aligned (the direction along the arrow line illustrated in Fig. 4A and Fig. 4B). Incidentally, in Fig. 4A and Fig. 4B, for convenience of explanation and notation, the temperature measurement positions 41a to 41b, 41c to 41d, 41e to 41f, 41g to 41h, 41i to 41j, and 41k to 41l are illustrated large with exaggeration (the same is true of Fig. 5A and Fig. 5B).

However, the actual direction of heat transfer is not only the thickness direction (x-axis direction) of the sidewall portion 6. When solving the one-dimensional non-steady state heat transfer inverse problem to calculate the temperature distribution of the sidewall portion 6 in the thickness direction, the direction of heat transfer is limited to the thickness direction of the sidewall portion 6. For this reason, even if the number of temperature measurement positions is increased, there is a limit to the improvement in accuracy of estimating the temperature distribution of the sidewall portion 6 in the thickness direction. Further, when solving a two-dimensional non-steady state heat transfer inverse problem to calculate the temperature distribution of the sidewall portion 6, the direction of heat transfer is limited to the thickness direction of the sidewall portion 6 and only one of the circumferential direction and the height direction of the sidewall portion 6.

In contrast to this, when solving the three-dimensional non-steady state heat transfer inverse problem to estimate the temperature of the inner circumferential surface 6a, it is possible to consider heat transfers from temperature measurement positions 51a, 51c, 51e, 51g, 51i, and 51k on the inner side to temperature measurement positions 51b, 51d, 51f, 51h, 51j, and 51l on the outer side, respectively, as illustrated in Fig. 5A and Fig. 5B. Therefore, the direction of heat transfer that can be considered in the non-steady state heat transfer inverse problem is not limited to the directions in which the temperature measurement positions 51a to 51b, 51c to 51d, 51e to 51f, 51g to 51h, 51i to 51j, and 51k to 41l are aligned. That is, the direction of heat transfer that can be considered in the non-steady state heat transfer inverse problem is each direction from any one of the temperature measurement positions 51a, 51c, 51e, 51g, 51i, and 51k on the inner side to any one of the temperature measurement positions 51b, 51d, 51f, 51h, 51j, and 51l on the outer side (directions along the arrow lines illustrated in Fig. 5A and Fig. 5B). As above, in the non-steady state heat transfer inverse problem, all of the directions, which are the thickness direction of the sidewall portion 6, the circumferential direction of the sidewall portion 6, and the height direction of the sidewall portion 6, can be considered. Therefore, by solving the three-dimensional non-steady state heat transfer inverse problem and calculating the temperature distribution of the sidewall portion 6 in the thickness direction, the accuracy of estimating the temperature distribution of the sidewall portion 6 in the thickness direction can be improved. This makes it possible to improve the accuracy of estimating the position of the inner circumferential surface 6a in the thickness direction.

Thus, in this embodiment, the three-dimensional non-steady state heat transfer inverse problem analysis is performed, to thereby calculate the temperature distribution of the sidewall portion 6 in the thickness direction.

Further, in order to calculate the temperature distribution of the sidewall portion 6 in the thickness direction over as wide a range as possible, the temperature measurement positions also need to be present over as wide a range as possible. When using the thermocouples as the temperature sensor as described in Patent Literature 1, it is practically difficult to install a large number of thermocouples in the sidewall portion 6 at precisely determined positions.

Thus, in this embodiment, the optical fiber temperature sensors 111 to 112 are used as the temperature sensor.

Further, when the temperature measurement position is present between the wear brick 7 and the permanent brick 8, or between the individual permanent bricks 8, there is a risk that the measurement accuracy of the temperature measured at the temperature measurement position may be lower than the measurement accuracy of the temperature measured at another temperature measurement position. This is because the temperature to be measured at the temperature measurement position is affected by the surrounding properties or voids of the temperature measurement position (temperature sensor). Therefore, the accuracy of the temperature to be measured by the temperature sensor may vary depending on the temperature measurement position. On the other hand, as long as the physical property values around the temperature sensor are substantially the same (preferably the same), such temperature variations can be inhibited. Further, when the temperature sensor is embedded in bricks, a workload increases.

Thus, this embodiment explains, as an example, the case where the temperature sensor is embedded in the precast block 9 having substantially the same physical property values (preferably the same physical property values). However, for example, as long as the physical property values around the temperature measurement position are substantially the same (preferably the same), the temperature sensor does not necessarily need to be embedded in the precast block 9. For example, the optical fiber temperature sensors 111 to 112 may be embedded in the permanent brick 8. In this case, it is preferable that only the positions inside the permanent brick 8 should be set as the temperature measurement position. Further, in this case, the precast block 9 does not need to be installed in the electric arc furnace 1.

<Facility state monitoring device 100>

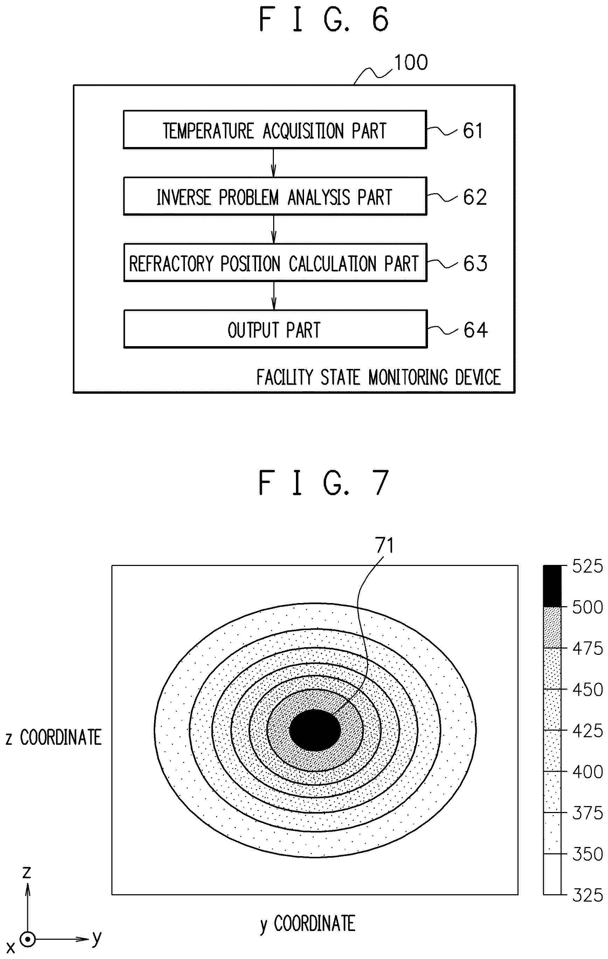

Next, there is explained an example of the facility state monitoring device 100. Fig. 6 is a diagram illustrating an example of a functional configuration of the facility state monitoring device 100. The facility state monitoring device 100 includes, as its hardware, one or more hardware processors, such as a CPU (Central Processing Unit), and one or more memories, such as a RAM (Random Access Memory) and a ROM (Read Only Memory), for example. The facility state monitoring device 100 executes various arithmetic operations by executing one or more programs stored in the memory using one or more hardware processors. Further, the facility state monitoring device 100 includes an input device and an output device as hardware. At least one of the input device and the output device may be provided outside the facility state monitoring device 100. In this case, the facility state monitoring device 100 performs wire communication or radio communication with the input device and the output device.

This embodiment explains, as an example, the case where the facility state monitoring device 100 includes a temperature acquisition part 61, an inverse problem analysis part 62, a refractory position calculation part 63, and an output part 64. There is explained an example of the functions of the respective parts below. Incidentally, information that can be set in advance in later-described calculations is assumed to have been stored in the facility state monitoring device 100 via the input device, for example.

<<Temperature acquisition part 61>>

The temperature acquisition part 61 acquires the measured values of the optical fiber temperature sensors 111 to 112. As described previously, this embodiment explains, as an example, the case where the temperatures at respective positions in the optical fibers 121 to 122 are calculated by the measuring devices 131 to 132. Therefore, this embodiment explains, as an example, the case where the temperature acquisition part 61 acquires the temperatures at the respective positions in the optical fibers 121 to 122 calculated by the measuring devices 131 to 132 as the measured values of the optical fiber temperature sensors 111 to 112. The temperature acquisition part 61 may acquire the measured values of the optical fiber temperature sensors 111 to 112 by performing wire communication or radio communication with the measuring devices 131 to 132. Further, the temperature acquisition part 61 may acquire the measured values of the optical fiber temperature sensors 111 to 112 via a device other than the measuring devices 131 to 132. Further, the temperature acquisition part 61 may have the functions of the measuring devices 131 to 132.

The positions at which the measured values of the optical fiber temperature sensors 111 to 112 are obtained are set in advance among the positions in the optical fibers 121 to 122. It is preferable that the positions at which the measured values of the optical fiber temperature sensors 111 to 112 are obtained should be as wide a range and as many positions as possible. This is because the accuracy of calculating the temperatures at later-described temperature measurement points (hot spot centroid positions, hot spot surrounding areas) improves. However, if there are too many positions at which the measured values of the optical fiber temperature sensors 111 to 112 are obtained, there is a risk that the calculation load may become too high. Therefore, it is preferable that the positions at which the measured values of the optical fiber temperature sensors 111 to 112 are obtained should be set in advance from the viewpoint of a balance between the reduction in calculation load and the improvement in calculation accuracy.

The temperature acquisition part 61 may acquire the measured values during charging as the measured values of the optical fiber temperature sensors 111 to 112. In this case, the facility state monitoring device 100 can calculate the position of the inner circumferential surface 6a in the thickness direction even when it is not possible to measure the state of the inner circumferential surface 6a of the sidewall portion 6 using a profile meter or the like due to the presence of raw material in the furnace. However, the timing at which the temperature acquisition part 61 acquires the measured values of the optical fiber temperature sensors 111 to 112 is not limited to such a timing. For example, the temperature acquisition part 61 may acquire the measured values at a period between charges as the measured values of the optical fiber temperature sensors 111 to 112. The period between charges is, for example, the period from when the molten metal and molten slag are discharged outside the furnace to when the next raw material is inserted.

This embodiment explains, as an example, the case where the optical fiber temperature sensors 111 to 112 measure the temperatures at the respective positions in the optical fibers 121 to 122 at regular time intervals. Further, this embodiment explains, as an example, the case where the temperature acquisition part 61 acquires the measured values of the optical fiber temperature sensors 111 to 112 in each time period. In the following explanation, the time period during which the temperature acquisition part 61 acquires the measured values of the optical fiber temperature sensors 111 to 112 is referred to as a temperature measurement period, as necessary.

<<Inverse problem analysis part 62>>

The inverse problem analysis part 62 performs the three-dimensional non-steady state heat transfer inverse problem analysis based on the measured values of the optical fiber temperature sensors 111 to 112, thereby calculating the temperature distribution of the sidewall portion 6 in the thickness direction (x-axis direction).

When performing the three-dimensional non-steady state heat transfer inverse problem analysis, N temperatures can be used per place of the sidewall portion 6 in the thickness direction as the temperature required for calculating a single position of the inner circumferential surface 6a in the thickness direction. There is explained, as an example, the case where this embodiment is designed as above. N is an integer of 2 or more. N is preferably an integer of 3 or more, and more preferably 5, (which is explained later).

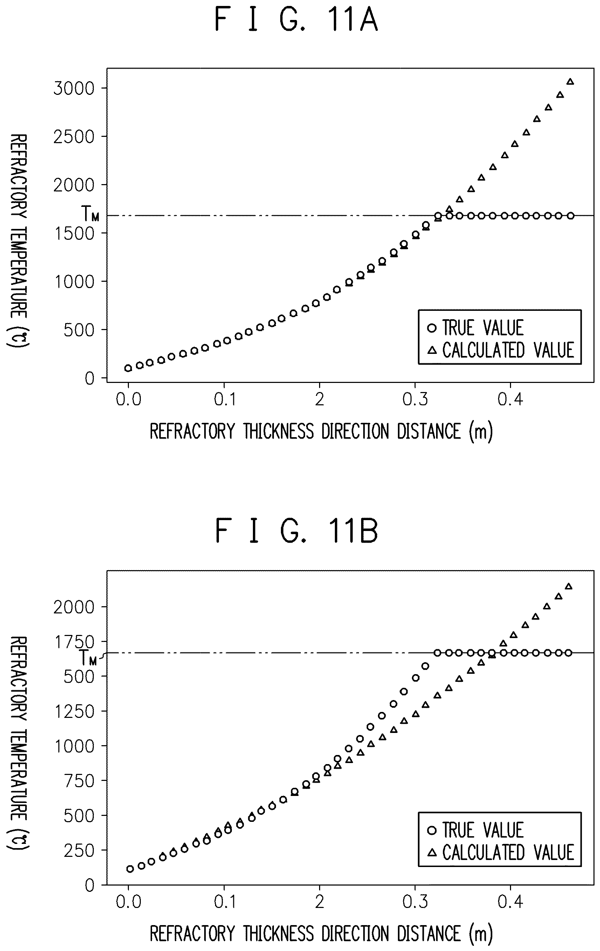

Further, when performing the three-dimensional non-steady state heat transfer inverse problem analysis, it is also considered that the accuracy of estimating a single position of the inner circumferential surface 6a in the thickness direction can be improved when using a larger number of temperatures as the temperature required for calculating a single position of the inner circumferential surface 6a in the thickness direction. However, this embodiment does not necessarily need to be designed in this manner, and the present disclosers have found out that it is preferable to use five temperatures per place of the sidewall portion 6 in the thickness direction as the temperature required for calculating a single position of the inner circumferential surface 6a in the thickness direction. That is, even if the number of temperatures (= N) required for calculating a single position of the inner circumferential surface 6a in the thickness direction is not greater than five, the accuracy of estimating the position of the inner circumferential surface 6a in the thickness direction can satisfy the accuracy required in practical use (can be brought close to an actual measured value) (a later-described calculation example (see Fig. 11)).

Thus, this embodiment explains, as an example, the case where the inverse problem analysis part 62 acquires five temperatures per place of the sidewall portion 6 in the thickness direction as the temperature required for calculating a single position of the inner circumferential surface 6a in the thickness direction based on the measured values of the optical fiber temperature sensors 111 to 112, and performs the three-dimensional non-steady state heat transfer inverse problem analysis based on the acquired temperatures. As described previously with reference to Fig. 1 to Fig. 3, this embodiment explains, as an example, the case where there are two installation regions (regions in the virtual planes 31a and 31b) for the optical fibers 121 and 122 in the thickness direction of the sidewall portion 6. Therefore, this embodiment explains, as an example, the case where the inverse problem analysis part 62 acquires a total of 10 (= 5 × 2) temperatures to calculate a single position of the inner circumferential surface 6a in the thickness direction.

The five temperatures acquired by the inverse problem analysis part 62 at one place of the sidewall portion 6 in the thickness direction may be measured values of the optical fiber temperature sensors 111 to 112, or may be temperatures calculated based on the measured values of the optical fiber temperature sensors 111 to 112. As described above, it is preferable that the number of temperatures to be acquired by the inverse problem analysis part 62 at one place of the sidewall portion 6 in the thickness direction should be five. However, the number of temperatures to be acquired by the inverse problem analysis part 62 at one place of the sidewall portion 6 in the thickness direction is not limited to five, and may be, for example, a number greater than five. However, if the number of temperatures to be acquired by the inverse problem analysis part 62 at one place of the sidewall portion 6 in the thickness direction is too many, a large number of measured values are required as the temperature measured value. Further, there is a risk that the accuracy of calculating a weighting coefficient $w_{i,j,k,l}$ in (3) Equation to be described later, which is calculated by performing the three-dimensional non-steady state heat transfer inverse problem analysis, may decrease (specifically, overfitting may occur). Therefore, it is preferable to set the number of temperatures to be acquired by the inverse problem analysis part 62 while considering these points. Further, the optimum value for the number of temperatures (= N) required for calculating a single position of the inner circumferential surface of the sidewall portion in the thickness direction can vary depending on the facility, for example. In this case, the number of temperatures (= N) required for calculating a single position of the inner circumferential surface of the sidewall portion in the thickness direction may be more than five or less than five.

Further, the thickness of the sidewall portion 6 (the wear brick 7) is likely to decrease near the hot spot. Thus, this embodiment explains, as an example, the case where the positions of the five temperatures to be acquired by the inverse problem analysis part 62 at one place of the sidewall portion 6 in the thickness direction are the following positions.

Fig. 7 is a view explaining an example of a hot spot region. As described previously, the hot spot is a position at which temperature is locally maximum. The hot spot region is a region including the hot spot. This embodiment explains, as an example, the case where the hot spot region is determined at each of the x coordinates of the installation regions of the optical fibers 121 and 122 (regions in the virtual planes 31a and 31b).

Fig. 7 illustrates the temperature distribution in the installation regions of the optical fibers 121 and 122 (regions in the virtual planes 31a and 31b) on the y-z plane. The temperature distribution illustrated in Fig. 7 is calculated based on the measured values of the optical fiber temperature sensors 111 to 112. For example, the temperature distribution illustrated in Fig. 7 is calculated by performing interpolation on the measured values of the optical fiber temperature sensors 111 to 112. The method of interpolation is not limited, and may be any well-known method such as linear approximation, spline interpolation, or polynomial interpolation, for example.

As long as the position at which temperature is locally maximum can be clearly determined at one point from the measured values of the optical fiber temperature sensors 111 to 112, the determined position may be set as the position of the hot spot region. In this case, the temperature at the position may be set as the temperature of the hot spot region. Further, the search for the hot spot region may be performed in each of a plurality of temperature divisions obtained by dividing temperature ranges measurable by the optical fibers 121 and 122 into a plurality of divisions. In this case, the region of the temperature division representing the highest temperature among the plural temperature divisions may be set as the hot spot region. In this case, a representative position of the hot spot region may be set as the position of the hot spot region, and the temperature at the position may be set as the temperature of the hot spot region. Fig. 7 illustrates, as an example, the case where the region corresponding to the temperature division of 500°C to 525°C is a hot spot region 71. The representative position of the hot spot region 71 is, for example, the position of the center of gravity of the hot spot region 71.

This embodiment explains, as an example, the case where the inverse problem analysis part 62 calculates the temperature of the hot spot region 71 based on the measured values of the optical fiber temperature sensors 111 to 112, for the entire installation regions of the optical fibers 121 and 122 (regions in the virtual planes 31a and 31b). In this case, the temperature of the hot spot region 71 is one of the five temperatures described previously. When there are a plurality of hot spot regions 71 in each of the installation regions of the optical fibers 121 and 122 (regions in the virtual planes 31a and 31b), the temperature of each of the hot spot regions 71 is one of the five temperatures described previously.

Incidentally, when the y-z coordinates of the representative position of the hot spot region 71 in the installation region of the inner optical fiber 121 (region in the virtual plane 31a) do not match with the y-z coordinates of the representative position of the hot spot region 71 in the installation region of the outer optical fiber 122 (region in the virtual plane 31b), the inverse problem analysis part 62 preferably calculates the temperatures of the hot spot regions 71 in the installation regions of the optical fibers 121 and 122 as follows. That is, in this case, the inverse problem analysis part 62 preferably makes the y-z coordinates of the representative positions of the hot spot regions 71 in the installation regions of the optical fibers 121 and 122 match with each other, and calculates the temperature of the matched y-z coordinates as the temperatures of the hot spot regions 71 in the installation regions of the optical fibers 121 and 122. For example, the inverse problem analysis part 62 may determine an arithmetic mean value of the y coordinates and an arithmetic mean value of the z coordinates of the hot spot regions 71 in the installation regions of the optical fibers 121 and 122 as the y coordinate and the z coordinate of each of the hot spot regions 71. Further, the inverse problem analysis part 62 may set one y coordinate and one z coordinate of the y coordinates and the z coordinates of the hot spot regions 71 in the installation regions of the optical fibers 121 and 122 as the other y coordinate and the other z coordinate.

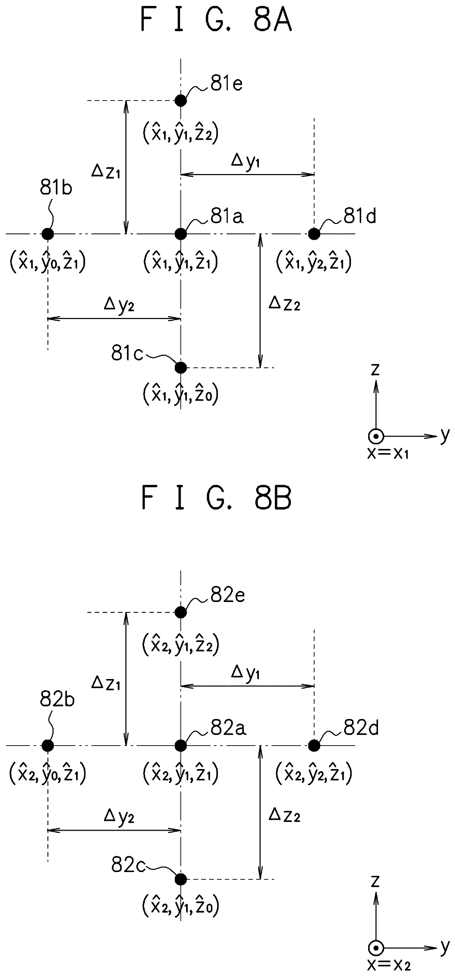

This embodiment explains, as an example, the case where of the five temperatures acquired by the inverse problem analysis part 62 at one place of the sidewall portion 6 in the thickness direction, the four positions other than the position of the hot spot region 71 are located at positions distributed around the position of the hot spot region 71. The distribution means that, for example, when four positions are projected onto the same plane, three or more of the four positions are not on the same straight line. Fig. 8A and Fig. 8B are views each illustrating an example of the positions of temperatures to be acquired when performing the three-dimensional non-steady state heat transfer inverse problem analysis. In the following explanation, the position of the hot spot region 71 is referred to as a hot spot centroid position as necessary.

Fig. 8A is a view illustrating an example of positions 81a to 81e of five temperatures to be acquired in the installation region of the inner optical fiber 121 (region in the virtual plane 31a). Fig. 8B is a view illustrating an example of positions 82a to 82e of five temperatures to be acquired in the installation region of the outer optical fiber 122 (region in the virtual plane 31b).

In Fig 8A, a coordinate value of the hot spot centroid position 81a in the installation region of the inner optical fiber 121 is set to $(x^{\wedge}_1, y^{\wedge}_1, z^{\wedge}_1)$. Incidentally, $x^{\wedge}$, $y^{\wedge}$, and $z^{\wedge}$ correspond to the symbols with ^ attached above x, y, and z, respectively, in later-described mathematical equations. As illustrated in Fig. 8A, this embodiment explains, as an example, the case where the four positions 81b to 81e around the hot spot centroid position 81a are determined on the y-z plane at a position at which the x coordinate is $x_1$. Coordinate values of the positions 81b, 81c, 81d, and 81e are set to $(x^{\wedge}_1, y^{\wedge}_0, z^{\wedge}_1)$, $(x^{\wedge}_1, y^{\wedge}_1, z^{\wedge}_0)$, $(x^{\wedge}_1, y^{\wedge}_2, z^{\wedge}_1)$, and $(x^{\wedge}_1, y^{\wedge}_1, z^{\wedge}_2)$, respectively.

In Fig. 8A, of the four positions 81b to 81e around the hot spot centroid position 81a, three or more positions are never located on the same straight line. Therefore, the positions 81b to 81e are located at positions distributed around the hot spot centroid position 81a. Incidentally, Fig. 8A illustrates, as an example, the case where of the four positions 81b to 81e around the hot spot centroid position 81a, only two positions (for example, the positions 81b and 81d) are located on the same straight line.

Similarly, in Fig. 8B, a coordinate value of the hot spot centroid position 82a in the installation region of the outer optical fiber 122 is set to $(x^{\wedge}_2, y^{\wedge}_1, z^{\wedge}_1)$. As illustrated in Fig. 8B, this embodiment explains, as an example, the case where the four positions 82b to 82e around the hot spot centroid position 82a are determined on the y-z plane at a position at which the x coordinate is $x_2$. Coordinate values of the positions 82b, 82c, 82d, and 82e are set to $(x^{\wedge}_2, y^{\wedge}_0, z^{\wedge}_1)$, $(x^{\wedge}_2, y^{\wedge}_1, z^{\wedge}_0)$, $(x^{\wedge}_2, y^{\wedge}_2, z^{\wedge}_1)$, and $(x^{\wedge}_2, y^{\wedge}_1, z^{\wedge}_2)$, respectively.

Distances $\Delta y_1, \Delta y_2, \Delta z_1$, and $\Delta z_2$ in the y-axis direction and the z-axis direction from the hot spot centroid positions 81a and 82a to the four positions 81b to 81e around the hot spot centroid position 81a and the four positions 82b to 82e around the hot spot centroid position 82a respectively are set before performing the three-dimensional non-steady state heat transfer inverse problem analysis. In the following explanation, the four positions around each of the hot spot centroid positions 81a and 82a are referred to as hot spot surrounding areas as necessary. Further, the distances $\Delta y_1, \Delta y_2, \Delta z_1$, and $\Delta z_2$ in the y-axis direction and the z-axis direction from the hot spot centroid position 81a to the hot spot surrounding areas 81b to 81e and from the hot spot centroid position 82a to the hot spot surrounding areas 82b to 82e are abbreviated to distances $\Delta y_1, \Delta y_2, \Delta z_1$, and $\Delta z_2$ respectively as necessary.

The distances $\Delta y_1, \Delta y_2, \Delta z_1$, and $\Delta z_2$ are not limited as long as they are determined so that, for example, the accuracy of calculating the position of the inner circumferential surface 6a in the thickness direction, which is calculated as will be described later, satisfies the accuracy required for practical use.

For example, the distances $\Delta y_1, \Delta y_2, \Delta z_1$, and $\Delta z_2$ where the calculation accuracy of the position of the inner circumferential surface 6a in the thickness direction satisfies the accuracy required for practical use may be found by trial and error. In this case, for example, the later-described three-dimensional non-steady state heat transfer inverse problem analysis is performed on a test furnace simulating the electric arc furnace 1, to thereby calculate the position of the inner circumferential surface 6a in the thickness direction, which is performed while varying the distances $\Delta y_1$, $\Delta y_2$, $\Delta z_1$, and $\Delta z_2$. Then, the calculated value of the position of the inner circumferential surface 6a in the thickness direction is compared with the actual measured value in the test furnace at each of the distances $\Delta y_1$, $\Delta y_2$, $\Delta z_1$, and $\Delta z_2$. Finally, based on the results of this comparison, the distances $\Delta y_1$, $\Delta y_2$, $\Delta z_1$, and $\Delta z_2$ where the calculation accuracy of the position of the inner circumferential surface 6a in the thickness direction satisfies the accuracy required for practical use are found out.

Further, as in this embodiment, when the hot spot centroid position 81a, 82a is included in the five temperatures acquired by the inverse problem analysis part 62 at one place of the sidewall portion 6 in the thickness direction, of the wear brick 7, the wear brick 7 located at a position intersecting with a virtual line connecting the hot spot centroid positions 81a and 82a and the center axis O of the electric arc furnace 1 at the shortest distance is sometimes worn out. When the wear brick 7 is worn out in this manner, the region of the inner circumferential surface 6a where the worn-out wear brick 7 is located is recessed relative to other regions. In this case, it is preferable to determine the distances $\Delta y_1$, $\Delta y_2$, $\Delta z_1$, and $\Delta z_2$ based on the size of the recessed portion. In the following explanation, the portion of the inner circumferential surface 6a that is recessed due to wear of the wear brick 7 is referred to as a worn-out portion as necessary. Incidentally, the wear of the wear brick 7 occurs due to erosion, peeling, or another cause of the wear brick 7.

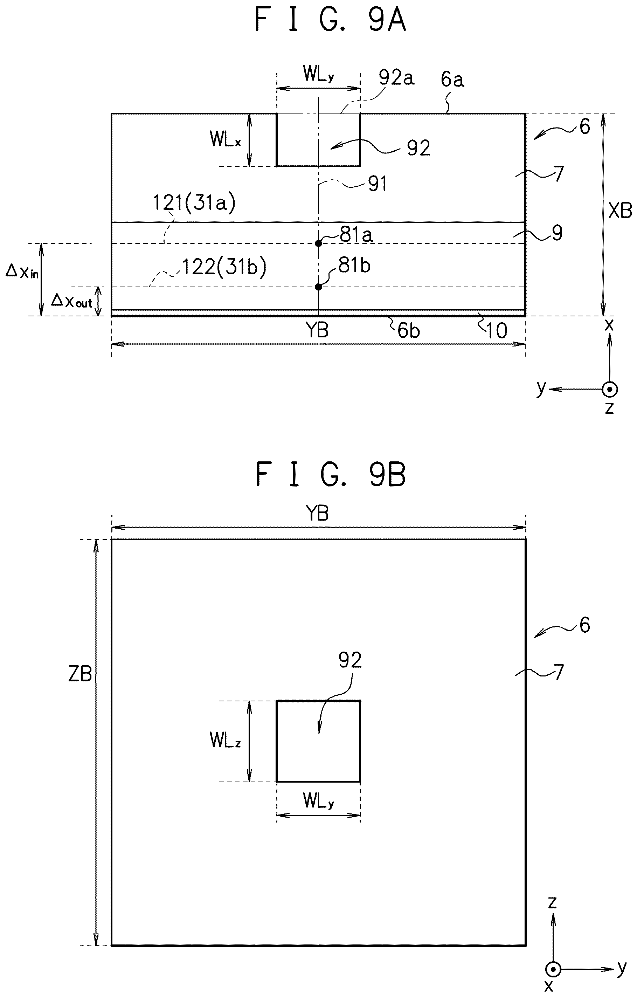

Fig. 9A and Fig. 9B are views each illustrating an example of the worn-out portion. Fig. 9A is a view illustrating an example of a region including the worn-out portion when the sidewall portion 6 is viewed from above. Fig. 9B is a view illustrating an example of a region including the worn-out portion when the sidewall portion 6 is viewed from the center axis O side of the electric arc furnace 1. Incidentally, Fig. 9A and Fig. 9B illustrate a state assumed to be the state where the sidewall portion 6 is cut along the height direction at one point in the circumferential direction and the sidewall portion 6 is developed. Further, Fig. 9A and Fig. 9B each illustrate only a portion of the sidewall portion 6 (the region corresponding to one precast block 9). Incidentally, for convenience of notation and explanation, hatching indicating cut surfaces is also omitted in Fig. 9A and Fig. 9B.

In Fig. 9A, assume that the wear brick 7 with a worn-out portion 92 formed therein is the wear brick 7 located at a position intersecting with a virtual line 91 that connects the hot spot centroid positions 81a and 82a and the center axis O of the electric arc furnace 1 at the shortest distance.

The distances $\Delta y_1$ and $\Delta y_2$ are determined based on, for example, a length $WL_y$ of the worn-out portion 92 in the circumferential direction (y-axis direction) (see Fig. 9A and Fig. 9B). Specifically, it is preferable that the distances $\Delta y_1$ and $\Delta y_2$ should fall within a range of 1/2 or less (or less than 1/2) of the length $WL_y$ of the worn-out portion 92 in the circumferential direction. In this case, this is because the hot spot surrounding areas 81b to 81e and 82b to 82e can be determined between both ends of the worn-out portion 92 in the y-axis direction. Further, the present disclosers have learned that when the distances $\Delta y_1$ and $\Delta y_2$ are set to 1/4 of the length $WL_y$ of the worn-out portion 92 in the circumferential direction, the accuracy of calculating the position of the inner circumferential surface 6a in the thickness direction is further improved, which is preferable.

Further, the distances $\Delta z_1$ and $\Delta z_2$ are determined based on, for example, a length $WL_z$ of the worn-out portion 92 in the height direction (z-axis direction) (see Fig. 9B). Specifically, it is preferable that the range that the distances $\Delta z_1$ and $\Delta z_2$ can take should be a range of 1/2 or less (or less than 1/2) of the length $WL_z$ of the worn-out portion 92 in the circumferential direction. In this case, this is because the hot spot surrounding areas 81b to 81e and 82b to 82e can be determined between both ends of the worn-out portion 92 in the z-axis direction. Further, the present disclosers have learned that when the distances $\Delta y_z$ and $\Delta y_z$ are set to 1/4 of the length $WL_z$ of the worn-out portion 92 in the circumferential direction, the accuracy of calculating the position of the inner circumferential surface 6a in the thickness direction is further improved, which is preferable.

Further, the distances $\Delta y_1$, $\Delta y_2$, $\Delta z_1$, and $\Delta z_2$ may be adjusted according to a depth $WL_x$ of the worn-out portion 92, for example. For example, as the depth $WL_x$ of the worn-out portion 92 increases, the distances $\Delta y_1$, $\Delta y_2$, $\Delta z_1$, and $\Delta z_2$ may be increased or decreased. Incidentally, the depth of the worn-out portion 92 is the length of the worn-out portion 92 in the thickness direction (x-axis direction).

Incidentally, for simplicity of explanation and notation, Fig. 9A and Fig. 9B each illustrate, as an example, the case where the shape of a space that is the worn-out portion 92 is a right quadrangular prism. However, the shape of the actual worn-out portion L is more complex than the right quadrangular prism. In this case, the lengths $WL_x$, $WL_y$, and $WL_z$ of the worn-out portion 92 in the respective directions may be set to, for example, representative lengths in the respective directions.

For example, the width $WL_y$ of the worn-out portion 92 and the height $WL_z$ of the worn-out portion 92 may be the length at an opening end 92a (a mouth portion) of the worn-out portion 92. Incidentally, the width of the worn-out portion 92 is the length in the circumferential direction (y-axis direction). Further, the height of the worn-out portion 92 is the length in the height direction (z-axis direction).

Further, for example, the lengths $WL_x$, $WL_y$, and $WL_z$ of the worn-out portion 92 in the respective directions may be, for example, the maximum lengths in the respective directions. Further, for example, the lengths $WL_x$, $WL_y$, and $WL_z$ of the worn-out portion 92 in the respective directions may be the lengths of the worn-out portion 92 at the gravity center position.

Here, the lengths $WL_x$, $WL_y$, and $WL_z$ of the worn-out portion 92 in the respective directions may be, for example, measured values of a profile meter, which are obtained by performing measurement at a period between charges, or may be visually observed values, which are obtained by performing observation at a period between charges. Incidentally, the measurement using a profile meter is achieved by well-known techniques, such as those described in Japanese Laid-open Patent Publication No. 2018-185253 and the like, and thus its detailed explanation is omitted here. Further, a test furnace simulating the electric arc furnace 1 may be used to investigate the relationship between the temperature of the hot spot region 71 and the lengths $WL_x$, $WL_y$, and $WL_z$ of the worn-out portion 92 in the respective directions. Then, based on the results of investigating the relationship, a mathematical equation or look-up table representing the relationship between the temperature of the hot spot region 71 and the lengths $WL_x$, $WL_y$, and $WL_z$ of the worn-out portion 92 in the respective directions may be created. In this case, the inverse problem analysis part 62 reads out the lengths $WL_x$, $WL_y$, and $WL_z$ of the worn-out portion 92 in the respective directions, which correspond to the temperature of the hot spot region 71.

The inverse problem analysis part 62 calculates the hot spot surrounding areas 81b to 81e and 82b to 82e based on the distances $\Delta y_1$, $\Delta y_2$, $\Delta z_1$, and $\Delta z_2$ determined as described above and the hot spot centroid positions 81a and 82a, and acquires the temperatures at the hot spot surrounding areas 81b to 81e and 82b to 82e.

In this manner, the inverse problem analysis part 62 acquires, as temperatures $u^{\wedge}$ at the coordinates $(x^{\wedge}_1, y^{\wedge}_1, z^{\wedge}_1)$ and $(x^{\wedge}_2, y^{\wedge}_1, z^{\wedge}_1)$ of the hot spot centroid positions 81a and 82a, the temperature $u^{\wedge}$ at each of times $t_1$ to $t_n$ of the time interval of the temperature measurement period. Similarly, the inverse problem analysis part 62 acquires the temperature $u^{\wedge}$ at each of the times $t_1$ to $t_n$ of the time interval of the temperature measurement period as the temperatures $u^{\wedge}$ at the coordinates $(x^{\wedge}_1, y^{\wedge}_0, z^{\wedge}_1)$, $(x^{\wedge}_1, y^{\wedge}_1, z^{\wedge}_0)$, $(x^{\wedge}_1, y^{\wedge}_2, z^{\wedge}_1)$, $(x^{\wedge}_1, y^{\wedge}_1, z^{\wedge}_2)$, $(x^{\wedge}_2, y^{\wedge}_0, z^{\wedge}_1)$, $(x^{\wedge}_2, y^{\wedge}_1, z^{\wedge}_0)$, $(x^{\wedge}_2, y^{\wedge}_2, z^{\wedge}_1)$, and $(x^{\wedge}_2, y^{\wedge}_1, z^{\wedge}_2)$ of the hot spot surrounding areas 81b to 81e and 82b to 82e.

Then, the inverse problem analysis part 62 solves the three-dimensional non-steady state heat transfer inverse problem analysis.

Then, there is explained an example of the three-dimensional non-steady state heat transfer inverse problem below. In the following explanation, the hot spot centroid positions 81a and 82a and the hot spot surrounding areas 81b to 81e and 82b to 82e are referred to as temperature measurement points 81a to 81e and 82a to 82e as necessary.

First, the three-dimensional non-steady state heat conduction equation is represented by the following (1) Equation.

[Mathematical equation 1]

$$\frac{\partial U(x, y, z, t)}{\partial t} = \alpha^2 \left( \frac{\partial^2 U}{\partial x^2} + \frac{\partial^2 U}{\partial y^2} + \frac{\partial^2 U}{\partial z^2} \right) \quad \cdot \cdot \cdot (1)$$

Here, U represents temperature. x, y, and z represent x, y, and z coordinates in the x-y-z coordinate system respectively. t represents time. $\alpha$ represents a square root of a thermal diffusivity. Incidentally, the thermal diffusivity is calculated using a thermal conductivity, a specific heat, and a density (specific gravity).

A basis function $\varphi$ $(x-x_c, y-y_c, z-z_c, t-t_c)$ is expressed by the following (2) Equation. The basis function $\varphi$ $(x-x_c, y-y_c, z-z_c, t-t_c)$ is a function expressed in the form of a fundamental solution that satisfies the non-steady state heat conduction equation in (1) Equation, and is a function when a center point c (a reference position $x_c$ and a reference time $t_c$) is used as the reference.

[Mathematical equation 2]

$$\phi(x - x_c, y - y_c, z - z_c, t - t_c) = \frac{1}{\left(4\pi\,\alpha^2(t - t_c + T)\right)^{\frac{3}{2}}} \exp\left(-\frac{(x - x_c)^2 + (y - y_c)^2 + (z - z_c)^2}{4\alpha^2(t - t_c + T)}\right)$$

$$\cdot \cdot \cdot (2)$$

Here, T represents a constant (model parameter) that represents a variance of a spatial distribution of the fundamental solution of the non-steady state heat conduction equation in (1) Equation, and is referred to as a time shift. $x_c$, $y_c$, $z_c$, and $t_c$ are a set of space-time coordinates called a source term and are set values (namely, $x_c$, $y_c$, $z_c$, and $t_c$ are not unknowns when solving the non-steady state heat transfer inverse problem). For example, pieces of information on the temperature measurement points 81a to 81e and 82a to 82e may be set in $x_c$, $y_c$, $z_c$, and $t_c$. Incidentally, in this case, $t_c$ represents the time when the measured values of the optical fiber temperature sensors 111 to 112 used when acquiring the temperatures at the temperature measurement points 81a to 81e and 82a to 82e were obtained. In the following explanation, the time when the measured values of the optical fiber temperature sensors 111 to 112 were obtained is referred to as a measurement time as necessary.

Here, a variable that identifies the position in the x-axis direction (thickness direction) of the temperature measurement points 81a to 81e and 82a to 82e is set to i (i = 1, 2). Further, a variable that identifies the position in the y-axis direction (circumferential direction) of the temperature measurement points 81a to 81e and 82a to 82e is set to j (j = 0, 1, 2). A variable that identifies the position in the z-axis direction (height direction) of the temperature measurement points 81a to 81e and 82a to 82e is set to k (k = 0, 1, 2). Further, a variable that identifies the temperature measurement time is set to 1 (= 1, ⋯, 2m).

An interpolation/extrapolation temperature u(x, y, z, t) required for calculating the temperature of the sidewall portion 6 is expressed as a linear sum of 10 × m basis functions φ (x-$x_i$, y-$y_j$, z-$z_k$, t-$t_l$). In this case, the interpolation/extrapolation temperature u(x, y, z, t) required for calculating the temperature of the sidewall portion 6 is expressed by the following (3) Equation. "10" in "10 × m" corresponds to the number of temperature measurement points 81a to 81e and 82a to 82e. "m" in "10 × m" corresponds to the temperature measurement time (1 to m, m + 1 to 2m). The interpolation/extrapolation temperature u(x, y, z, t) is the temperature that satisfies the three-dimensional non-steady state heat conduction equation expressed by (1) Equation. The interpolation/extrapolation temperature u(x, y, z, t) is an approximate solution of the temperature U(x, y, z, t).

[Mathematical equation 3]

$$u(x, y, z, t)$$

$$= \sum_{l=1}^{m} w_{1,1,1,l}\, \phi\left(x - x_1, y - y_1, z - z_1, t - t_l\right) + \sum_{l=m+1}^{2m} w_{2,1,1,l}\, \phi\left(x - x_2, y - y_1, z - z_1, t - t_l\right)$$

$$+ \sum_{l=1}^{m} w_{1,2,1,l}\, \phi\left(x - x_1, y - y_2, z - z_1, t - t_l\right) + \sum_{l=m+1}^{2m} w_{2,2,1,l}\, \phi\left(x - x_2, y - y_2, z - z_1, t - t_l\right)$$

$$+ \sum_{l=1}^{m} w_{1,0,1,k}\, \phi\left(x - x_1, y - y_0, z - z_1, t - t_l\right) + \sum_{l=m+1}^{2m} w_{2,0,1,l}\, \phi\left(x - x_2, y - y_0, z - z_1, t - t_l\right)$$

$$+ \sum_{l=1}^{m} w_{1,1,2,l}\, \phi\left(x - x_1, y - y_1, z - z_2, t - t_l\right) + \sum_{l=m+1}^{2m} w_{2,1,2,l}\, \phi\left(x - x_2, y - y_1, z - z_2, t - t_l\right)$$

$$+ \sum_{l=1}^{m} w_{1,1,0,l}\, \phi\left(x - x_1, y - y_1, z - z_0, t - t_l\right) + \sum_{l=m+1}^{2m} w_{2,1,0,l}\, \phi\left(x - x_2, y - y_1, z - z_0, t - t_l\right)$$

・・・（3）

It is necessary to determine 10 × m weighting coefficients $w_{i,j,k,l}$ in (3) Equation. For this purpose, a simultaneous equation that is composed of temperatures u^($x^_i$, $y^_j$, $z^_k$, $t_l$) at 2 × n times, which are the temperatures at the 10 temperature measurement points 81a to 81e and 82a to 82e, is used. Here, n ≥ m is established. n = m may be established. Further, the coordinate value ($x^_i$, $y^_j$, $z^_k$, $t_l$) of the time-space coordinates may be the same as the source term ($x_i$, $y_j$, $z_k$, $t_l$). In this case, 20 × n simultaneous equations required for determining the 10 × m weighting coefficients $w_{i,j,k,l}$ are expressed by the following (4) Equation. Incidentally, in (4) Equation, for convenience of notation, only two of the 20 × n simultaneous equations (the simultaneous equations in the case of 1 = 1, 2n) are illustrated.

[Mathematical expression 4]

$$\hat{u}\left(\hat{x}_i, \hat{y}_j, \hat{z}_k, t_1\right)$$

$$= \sum_{l=1}^{m} w_{1,1,1,l}\, \phi\left(\hat{x}_i - x_1, \hat{y}_j - y_1, \hat{z}_k - z_1, t_1 - t_l\right) + \sum_{l=m+1}^{2m} w_{2,1,1,l}\, \phi\left(\hat{x}_{i+1} - x_2, \hat{y}_j - y_1, \hat{z}_k - z_1, t_1 - t_l\right)$$

$$+ \sum_{l=1}^{m} w_{1,2,1,l}\, \phi\left(\hat{x}_i - x_1, \hat{y}_j - y_2, \hat{z}_k - z_1, t_1 - t_l\right) + \sum_{l=m+1}^{2m} w_{2,2,1,l}\, \phi\left(\hat{x}_{i+1} - x_2, \hat{y}_j - y_2, \hat{z}_k - z_1, t_1 - t_l\right)$$

$$+ \sum_{l=1}^{m} w_{1,0,1,k}\, \phi\left(\hat{x}_i - x_1, \hat{y}_j - y_0, \hat{z}_k - z_1, t_1 - t_l\right) + \sum_{l=m+1}^{2m} w_{2,0,1,l}\, \phi\left(\hat{x}_{i+1} - x_2, \hat{y}_j - y_0, \hat{z}_k - z_1, t_1 - t_l\right)$$

$$+ \sum_{l=1}^{m} w_{1,1,2,l}\, \phi\left(\hat{x}_i - x_1, \hat{y}_j - y_1, \hat{z}_k - z_2, t_1 - t_l\right) + \sum_{l=m+1}^{2m} w_{2,1,2,l}\, \phi\left(\hat{x}_{i+1} - x_2, \hat{y}_j - y_1, \hat{z}_k - z_2, t_1 - t_l\right)$$

$$+ \sum_{l=1}^{m} w_{1,1,0,l}\, \phi\left(\hat{x}_i - x_1, \hat{y}_j - y_1, \hat{z}_k - z_0, t_1 - t_l\right) + \sum_{l=m+1}^{2m} w_{2,1,0,l}\, \phi\left(\hat{x}_{i+1} - x_2, \hat{y}_j - y_1, \hat{z}_k - z_0, t_1 - t_l\right)$$

$$\cdots$$

$$\hat{u}\left(\hat{x}_i, \hat{y}_j, \hat{z}_k, t_{2n}\right)$$

$$= \sum_{l=1}^{m} w_{1,1,1,l}\, \phi\left(\hat{x}_i - x_1, \hat{y}_j - y_1, \hat{z}_k - z_1, t_{2n} - t_l\right) + \sum_{l=m+1}^{2m} w_{2,1,1,l}\, \phi\left(\hat{x}_{i+1} - x_2, \hat{y}_j - y_1, \hat{z}_k - z_1, t_{2n} - t_l\right)$$

$$+ \sum_{l=1}^{m} w_{1,2,1,l}\, \phi\left(\hat{x}_i - x_1, \hat{y}_j - y_2, \hat{z}_k - z_1, t_{2n} - t_l\right) + \sum_{l=m+1}^{2m} w_{2,2,1,l}\, \phi\left(\hat{x}_{i+1} - x_2, \hat{y}_j - y_2, \hat{z}_k - z_1, t_{2n} - t_l\right)$$

$$+ \sum_{l=1}^{m} w_{1,0,1,k}\, \phi\left(\hat{x}_i - x_1, \hat{y}_j - y_0, \hat{z}_k - z_1, t_{2n} - t_l\right) + \sum_{l=m+1}^{2m} w_{2,0,1,l}\, \phi\left(\hat{x}_{i+1} - x_2, \hat{y}_j - y_0, \hat{z}_k - z_1, t_{2n} - t_l\right)$$

$$+ \sum_{l=1}^{m} w_{1,1,2,l}\, \phi\left(\hat{x}_i - x_1, \hat{y}_j - y_1, \hat{z}_k - z_2, t_{2n} - t_l\right) + \sum_{l=m+1}^{2m} w_{2,1,2,l}\, \phi\left(\hat{x}_{i+1} - x_2, \hat{y}_j - y_1, \hat{z}_k - z_2, t_{2n} - t_l\right)$$

$$+ \sum_{l=1}^{m} w_{1,1,0,l}\, \phi\left(\hat{x}_i - x_1, \hat{y}_j - y_1, \hat{z}_k - z_0, t_{2n} - t_l\right) + \sum_{l=m+1}^{2m} w_{2,1,0,l}\, \phi\left(\hat{x}_{i+1} - x_2, \hat{y}_j - y_1, \hat{z}_k - z_0, t_{2n} - t_l\right)$$

$$\cdots (4)$$

The matrix that stores the temperature u^ in (4) Equation is denoted as $U(\in R^{(2n \times 5) \times 1})$. Further, the matrix that stores the basis function φ in (4) Equation is denoted as $\Phi(\in R^{(2n \times 5) \times (2m \times 5)})$. Further, the matrix (vector) that stores the weighting coefficient w in (4) Equation is denoted as $W(\in R^{(2m \times 5) \times 1})$. Further, the matrix (vector) that stores an error term between a left-hand side and a right-hand side of (4) Equation is denoted as $e(\in^{(2n \times 5) \times 1})$. Then, (4) Equation can be rewritten into the following (5) Equation. Incidentally, T represents a transposed matrix. To obtain a least squares solution for the matrix W, a cost function J: $R^{(2n \times 5) \times 1} \rightarrow R$ in the following (6) Equation for the matrix e is used. Here, $\gamma(\in R)$ is a regularization coefficient required for compensating for the stability of a solution. The matrix W when the value of the cost function J is minimized is the matrix W that satisfies the following (7) Equation. Specifically, the matrix W when the value of the cost function J is minimized is expressed by the following (8) Equation. Here, $I(\in Z^{(2m \times 5) \times (2m \times 5)})$ is a unit matrix. Incidentally, the cost function J is not limited to (6) Equation as long as it is a function that evaluates the error between the left-hand side and the right-hand side of (4) Equation.

[Mathematical equation 5]

$$U = \Phi W + e \quad \cdots (5)$$

$$J = |U - \Phi W|^2 + \gamma |W|^2 \quad \cdots (6)$$

$$\frac{\partial J}{\partial W} = -2\Phi^T(U - \Phi W) + 2\gamma W = 0 \quad \cdots (7)$$

$$W = (\Phi^T \Phi + \gamma I)^{-1} \Phi^T U \quad \cdots (8)$$

The matrix W (the weighting coefficient $w_{i,j,k,l}$) may be calculated from (8) Equation. However, in an inverse problem, solving the inverse matrix of the right-hand side of (8) Equation may cause the solution to be unstable due to amplification of errors. Thus, in this embodiment, the matrix $\Phi$ is subjected to singular value decomposition as illustrated in the following (9) Equation. Here, $S(\in R^{(2n \times 5) \times (2n \times 5)})$ is a left singular value matrix. $\Sigma(\in R^{(2n \times 5) \times (2m \times 5)})$ is a diagonal matrix in which singular values are stored. $V(\in R^{(2m \times 5) \times (2m \times 5)})$ is a right singular value matrix. Then, the matrix W is expressed by the following (10) Equation. This embodiment explains, as an example, the case where the inverse problem analysis part 62 calculates the matrix W from (10) Equation.

[Mathematical equation 6]

$$\Phi = S\Sigma V^T \quad \cdots (9)$$

$$W = (\Phi^T \Phi + \gamma I)^{-1} \Phi^T U \quad \cdots (10)$$

The inverse problem analysis part 62 performs the above processing, for example, every time the temperature acquisition part 61 acquires the measured values of the optical fiber temperature sensors 111 to 112. Thereby, the matrix W (the weighting coefficient $w_{i,j,k,l}$) is calculated at each time t (each measurement time) of the time interval of the temperature measurement period.

Then, the inverse problem analysis part 62 calculates the value of an interpolation/extrapolation temperature function u(x, y, z, t) by substituting the weighting coefficient $w_{i,j,k,l}$, a thermal diffusivity $\alpha^2$ of the precast block 9, the time (reference time) $t_c$ (= $t_l$) when the measured values of the optical fiber temperature sensors 111 to 112 were acquired, and the coordinates $(x^\wedge_i, y^\wedge_j, z^\wedge_k)$ (= $(x_i, y_j, z_k)$) of the temperature measurement points 81a to 81e and 82a to 82e into (3) Equation, and sets the calculated value as the temperature u(x, y, z, t).

Here, heat in the thickness direction of the region where the precast block 9 is present is transferred in the order of inside the furnace → adhering substances on the inner circumferential surface 6a → the wear brick 7 → the precast block 9 → the furnace shell 10 → outside the furnace. Incidentally, it is possible that no adhering substances are present on the inner circumferential surface 6a. As described previously, in the region between the wear brick 7 and the precast block 9, and in the region between the precast block 9 and the furnace shell 10, there is material required for connecting (fixing) them together. Further, voids may occur in these regions. Therefore, these regions result in regions that hinder heat transfer. Therefore, when performing a heat transfer calculation rigorously, it is necessary to consider physical property values of these regions. Thus, the three-dimensional non-steady state heat transfer inverse problem may be formulated while considering the physical property values of these regions. However, it is not easy to determine the physical property values of these regions. Further, the physical property values differ depending on the type of adhering substances, and thus it is not easy to determine the physical property values of the adhering substances.

The present disclosers have conducted extensive investigation based on the above. As a result, the present disclosers have found out that if the thermal diffusivity of the precast block 9 is used as the thermal diffusivity (the square root of $\alpha$) when calculating the weighting coefficient $w_{i,j,k,l}$, the accuracy of the temperature calculated by the interpolation/extrapolation temperature function u(x, y, z, t) satisfies the accuracy required for practical use (can be brought close to the actual measured value) even if no other thermal diffusivities are used when calculating the weighting coefficient $w_{i,j,k,l}$ (see a later-described calculation example (Fig. 11)).

When the thermal diffusivity of the precast block 9 is used as the thermal diffusivity (the square root of $\alpha$), the value of the interpolation/extrapolation temperature function u(x, y, z, t) becomes the temperature of the precast block 9 basically. In other words, when the thermal diffusivity of the precast block 9 is used as the thermal diffusivity (the square root of $\alpha$), it is necessary to set the range of coordinates (x, y, z) in the x-y-z coordinate system to which the interpolation/extrapolation temperature function u(x, y, z, t) is applied to the coordinates of the region of the precast block 9. However, the present disclosers have found out that even if the coordinates (x, y, z) are treated as the coordinates of a region other than the precast block 9, the accuracy of the value of the interpolation/extrapolation temperature function u(x, y, z, t) satisfies the accuracy required for practical use. Thus, this embodiment explains, as an example, the case where the thermal diffusivity of the precast block 9 is used as the thermal diffusivity (the square root of $\alpha$) included in the interpolation/extrapolation temperature function u(x, y, z, t), and thermal diffusivities of other members are not used. For example, when the optical fibers 121 to 122 are embedded in the permanent brick 8, the thermal diffusivity of the permanent brick 8 is used, and thermal diffusivities of other members are not used.

As above, this embodiment explains, as an example, the case where the temperature at each position of the electric arc furnace 1 including the sidewall portion 6 is calculated based on the value of the interpolation/extrapolation temperature function u(x, y, z, t) in (3) Equation. This embodiment explains, as an example, the case where the facility state monitoring device 100 calculates the position of the inner circumferential surface 6a in the thickness direction. Therefore, this embodiment explains, as an example, the case where the inverse problem analysis part 62 calculates the temperature distribution of at least the sidewall portion 6 in the thickness direction (x-axis direction) based on the value of the interpolation/extrapolation temperature function u(x, y, z, t) in (3) Equation.

More specifically, this embodiment explains, as an example, the case where the inverse problem analysis part 62 calculates the temperature distribution of the sidewall portion 6 in the thickness direction (x-axis direction) at the y coordinate and the z coordinate of the hot spot centroid positions 81a and 82a. The position (the y coordinate and the z coordinate) at which the temperature distribution of the sidewall portion 6 in the thickness direction (x-axis direction) is calculated is preferably set to the hot spot centroid positions 81a and 82a. This is because it is possible to calculate the temperature distribution of the sidewall portion 6 in the thickness direction (x-axis direction) at the position at which wear is expected to have most progressed.

However, the position (the y coordinate and the z coordinate) at which the temperature distribution of the sidewall portion 6 in the thickness direction (x-axis direction) is calculated is not limited to the hot spot centroid position 81a or 82a.

For example, the inverse problem analysis part 62 may calculate the temperature distribution of the sidewall portion 6 in the thickness direction (x-axis direction) at the hot spot surrounding areas 81b to 81e and 82b to 82e in addition to or instead of the hot spot centroid positions 81a and 82a.

Further, for example, there may be a case where it is impossible to identify the hot spot region 71. In this case, the inverse problem analysis part 62 does not need to identify the hot spot region 71. For example, the inverse problem analysis part 62 may replace the position of the hot spot region 71 with a preset position and calculate the temperature distribution of the sidewall portion 6 in the thickness direction (x-axis direction) at the replaced position as described above. The position (the aforementioned preset position) with which the position of the hot spot region 71 is replaced may be, for example, a position at which the hot spot is expected to occur. Further, the position with which the position of the hot spot region 71 is replaced may be a position that is scheduled to be repaired, or may be another position (for example, a position set to manage a time transition of the state of the electric arc furnace 1).

<<Refractory position calculation part 63>>

The refractory position calculation part 63 calculates the position of the inner circumferential surface 6a in the thickness direction based on the temperature distribution of the sidewall portion 6 in the thickness direction calculated by the inverse problem analysis part 62. This embodiment explains, as an example, the case where the inverse problem analysis part 62 calculates the temperature distribution of the sidewall portion 6 in the thickness direction (x-axis direction) at the y-coordinate and the z-coordinate of the hot spot centroid positions 81a and 82a. Therefore, this embodiment explains, as an example, the case where the refractory position calculation part 63 calculates the x coordinate of the inner circumferential surface 6a at the y coordinate and the z coordinate of the hot spot centroid positions 81a and 82a.

For example, the refractory position calculation part 63 calculates, as the x-coordinate of the inner circumferential surface 6a, the position (x coordinate) in the thickness direction at which the temperature is the same as the temperature of the molten metal in the temperature distribution of the sidewall portion 6 in the thickness direction (x-axis direction). The temperature of the molten metal may be a measured value or an estimated value (a target value or a calculated value). Incidentally, when the temperature distribution of the sidewall portion 6 in the thickness direction (x-axis direction) is calculated at a y coordinate and a z coordinate different from the y coordinate and the z coordinate of the hot spot centroid positions 81a and 82a, for example, the temperature of the position in the furnace having the same y coordinate and z coordinate as the positions different from the hot spot centroid positions 81a and 82a may be used instead of the temperature of the molten metal.

The wear brick 7 forms the inner circumferential surface 6a, and thus the state of the wear brick 7 can be identified by the x coordinate of the inner circumferential surface 6a. For example, when the x-y-z coordinate system is determined as illustrated in Fig. 9A and Fig. 9B, a smaller value of the x coordinate corresponds to the fact that the depth $WL_x$ of the worn-out portion 92 becomes deep (namely, corresponds to the fact that the thickness of the wear brick 7 decreases). On the other hand, a larger value of the x coordinate corresponds to the fact that adhering substances are on the inner circumferential surface 6a (the wear brick 7).

Here, the length in the thickness direction (x-axis direction) from the furnace shell 10 to the inner circumferential surface 6a is referred to as a equivalent refractory length. This embodiment explains, as an example, the case where the equivalent refractory length is obtained by calculating the difference between the x coordinate of the furnace shell 10 and the x coordinate of the inner circumferential surface 6a at the y coordinate and the z coordinate of the hot spot centroid positions 81a and 82a.

For example, the refractory position calculation part 63 stores the equivalent refractory length in a new electric arc furnace 1 as a current value of the equivalent refractory length. The equivalent refractory length in the new electric arc furnace 1 is, for example, a design value. When the equivalent refractory length calculated thereafter is shorter than the current value of the equivalent refractory length, the refractory position calculation part 63 determines that the thickness of the wear brick 7 has decreased. Then, the refractory position calculation part 63 updates the current value of the equivalent refractory length to the calculated equivalent refractory length. On the other hand, when the calculated equivalent refractory length is longer than the current value of the equivalent refractory length, the refractory position calculation part 63 calculates the difference between the calculated equivalent refractory length and the current value of the equivalent refractory length as the thickness of the adhering substances (length in the thickness direction (x-axis direction)). Incidentally, the method of managing the state of the wear brick 7 using the equivalent refractory length is not limited to the above method. For example, the refractory position calculation part 63 may calculate the increase or decrease in the equivalent refractory length from the previous value.

<<Output part 64>>

The output part 64 outputs inner circumferential surface state information. The inner circumferential surface state information is information on the x coordinate of the inner circumferential surface 6a (the position of the inner circumferential surface 6a in the thickness direction) calculated by the refractory position calculation part 63. The inner circumferential surface state information is not limited to the x coordinate of the inner circumferential surface 6a. For example, the inner circumferential surface state information may be information calculated using the x coordinate of the inner circumferential surface 6a. For example, the output part 64 outputs at least one of the current value of the x coordinate of the inner circumferential surface 6a and the current value of the equivalent refractory length. The output of information by the output part 64 is performed, for example, by at least one of displaying it on a computer display, transmitting it to an external device, and storing it in a storage medium external to the facility state monitoring device 100.

When the measured values of the optical fiber temperature sensors 111 to 112 are acquired during charging, the output part 64 can output the inner circumferential surface state information during the charging. Therefore, with the inner circumferential surface state information, a repair portion of the inner circumferential surface 6a can be identified during charging. The repair portion of the inner circumferential surface 6a may be identified by an operator or by the facility state monitoring device 100. For example, the facility state monitoring device 100 may include a repair portion identification part that identifies the repair portion based on the current value of the x coordinate of the inner circumferential surface 6a. In this case, the repair portion identification part determines whether or not the current value of the equivalent refractory length is less than a threshold value, for example. As a result of this determination, when the current value of the equivalent refractory length is less than the threshold value, the repair portion identification part identifies the position of the inner circumferential surface 6a used when calculating the equivalent refractory length as the repair portion. Further, the threshold value is determined based on the thickness (length in the x-axis direction) of the wear brick 7 whose function as a refractory is impaired. When the facility state monitoring device 100 calculates the repair portion in this manner, the output part 64 may output information indicating the repair portion as the inner circumferential surface state information. Then, the repair portion identified in the above manner is repaired. The repair is performed, for example, by filling the worn-out portion 92 with a repair material. Incidentally, the method of repairing the refractory can be achieved by a well-known technique, and thus a detailed explanation of the method is omitted here.

Further, with the inner circumferential surface state information, during charging, there is a risk that the contents inside the furnace (molten metal, or the like) may be discharged from the sidewall portion 6 to the outside of the furnace, and thus it is possible to determine whether or not to interrupt or stop the operation. This determination may be performed by an operator, or identified by the facility state monitoring device 100. For example, the facility state monitoring device 100 may include an operation continuation determination part that determines whether or not to continue operation of the electric arc furnace 1 based on the current value of the x coordinate of the inner circumferential surface 6a. The operation continuation determination part may determine not to continue the operation (namely, to interrupt or stop the operation) when the current value of the equivalent refractory length is less than a threshold value, for example. The threshold value is determined based on the thickness (length in the x-axis direction) of the wear brick 7 whose function as a refractory is impaired, for example. Incidentally, the threshold value used when determining whether or not to continue operation of the electric arc furnace 1 is preferably set to a value smaller than the threshold value used when calculating the repair portion described previously. In this case, the latter threshold value is a length having a larger margin than the former threshold value for the thickness of the wear brick 7 whose function as a refractory is impaired. When the facility state monitoring device 100 determines whether or not to continue operation of the electric arc furnace 1 in this manner, the output part 64 may output information indicating the result of the determination as the inner circumferential surface state information.

<Flowchart>

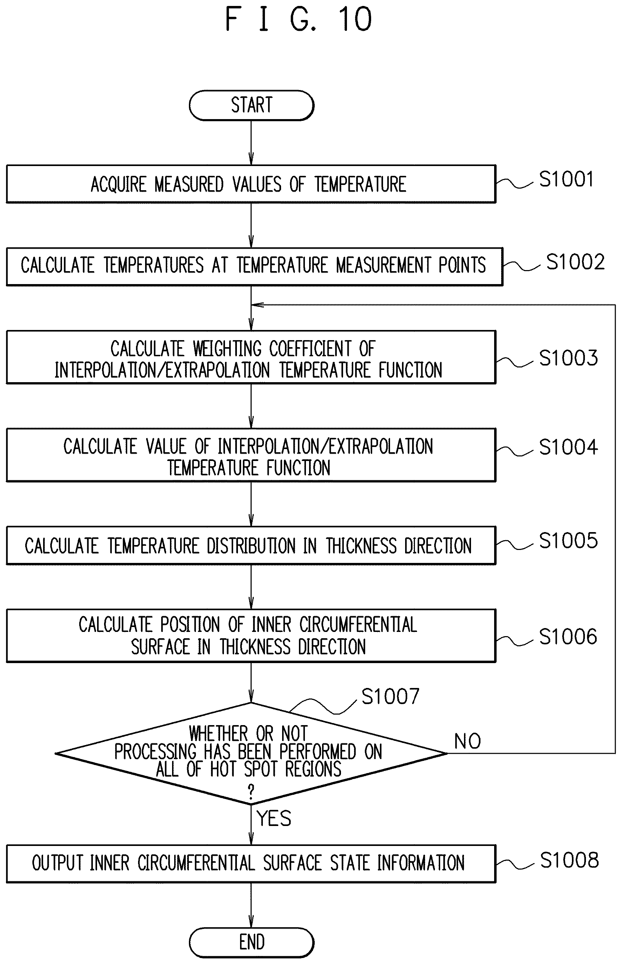

Next, there is explained an example of the facility state monitoring method to be performed using the facility state monitoring device 100 in this embodiment with reference to a flowchart in Fig. 10. Incidentally, information that can be set in advance before the flowchart in Fig. 10 starts has been stored in the facility state monitoring device 100 via the input device. Further, the flowchart in Fig. 10 is achieved by a processor included in the facility state monitoring device 100 executing a program stored in a memory, for example.

First, at Step S1001, the temperature acquisition part 61 acquires the measured values of the optical fiber temperature sensors 111 to 112. This embodiment explains, as an example, the case where the temperature acquisition part 61 acquires the temperature at each position in the optical fibers 121 to 122 at the plural times $t_1$, •••, $t_m$.

Then, at Step S1002, the inverse problem analysis part 62 calculates the temperatures $u^{\wedge}(x^{\wedge}_i, y^{\wedge}_j, z^{\wedge}_k, t_l)$ at the temperature measurement points 81a to 81e and 82a to 82e based on the measured values of the optical fiber temperature sensors 111 to 112. Then, the processing at Step S1003 is performed.

Here, the temperature measurement points 81a to 81e and 82a to 82e include the hot spot centroid positions 81a and 82a (positions of the hot spot region 71). At Step S1002, when a plurality of positions are obtained as the hot spot centroid positions 81a and 82a (positions of the hot spot region 71), the hot spot surrounding areas 81b to 81e are calculated for the hot spot centroid position 81a and the hot spot surrounding areas 82b to 82e are calculated for the hot spot centroid position 82a.

Thus, Fig. 10 illustrates, as an example, the case where in one-time pieces of the processing at Steps S1003 to S1106, the temperatures $u^{\wedge}(x^{\wedge}_i, y^{\wedge}_j, z^{\wedge}_k, t_l)$ at the temperature measurement points 81a to 81e and 82a to 82e for one hot spot region 71 are used.

At Step S1003, the inverse problem analysis part 62 calculates the weighting coefficient $w_{i,j,k,l}$ of the interpolation/extrapolation temperature function $u(x, y, z, t)$ in (3) Equation based on the temperatures $u^{\wedge}(x^{\wedge}_i, y^{\wedge}_j, z^{\wedge}_k, t_l)$ calculated at Step S1002.

Then, at Step S1004, the inverse problem analysis part 62 calculates the value of the interpolation/extrapolation temperature function $u(x, y, z, t)$ (namely, the temperature $u(x, y, z, t)$) by substituting the weighting coefficient $w_{i,j,k,l}$ calculated at Step S1003, the time coordinates $(x^{\wedge}_i, y^{\wedge}_j, z^{\wedge}_k, t_l)$ (= $(x_i, y_j, z_k, t_l)$) of the temperature measurement points 81a to 81e and 82a to 82e, and the thermal diffusivity $\alpha^2$ of the precast block 9 into (3) Equation.

Then, at Step S1005, the inverse problem analysis part 62 calculates the temperature distribution of the sidewall portion 6 in the thickness direction (x-axis direction) at the y-coordinate and the z-coordinate of the hot spot centroid positions 81a and 82a based on the value of the interpolation/extrapolation temperature function $u(x, y, z, t)$.

Then, at Step S1006, based on the temperature distribution of the sidewall portion 6 in the thickness direction (x-axis direction) at the y-coordinate and the z-coordinate of the hot spot centroid positions 81a and 82a calculated at Step S1005, the refractory position calculation part 63 calculates the position of the inner circumferential surface 6a in the thickness direction (x-coordinate) at the y coordinate and the z-coordinate of the hot spot centroid positions 81a and 82a.

Then, at Step S1007, the facility state monitoring device 100 determines whether or not the processing has been performed on all of the hot spot regions 71. As a result of this determination, when the processing has not been performed on all of the hot spot regions 71 (in the case of NO at Step S1007), the processing at Step S1003 is performed. Then, at Steps S1003 to S1006, the inverse problem analysis part 62 and the refractory position calculation part 63 calculate the position of the inner circumferential surface 6a in the thickness direction at the y coordinate and the z coordinate of the hot spot centroid positions 81a and 82a of the hot spot region 71 on which the processing has not been performed.

Then, at Step S1007, when it is determined that the processing has been performed on all of the hot spot regions 71 (in the case of YES at Step S1007), the processing at Step S1008 is performed. At Step S1008, the output part 64 outputs the inner circumferential surface state information. When the plural hot spot regions 71 are obtained at Step S1002, in the repetitive processing at Steps S1003 to S1006, the same number of positions as the number of hot spot regions 71 are calculated as the position of the inner circumferential surface 6a in the thickness direction. Therefore, in this case, the output part 64 outputs the inner circumferential surface state information for each of the plural positions of the inner circumferential surface 6a in the thickness direction. When the processing at Step S1008 is finished, the processing according to the flowchart in Fig. 10 is finished.

<Calculation example>

Next, there is explained a calculation example. In this calculation example, the sidewall portion 6 to be subjected to the three-dimensional non-steady state heat transfer inverse problem analysis was set as a sidewall portion modeled as illustrated in Fig. 9A and Fig. 9B. In this calculation example, the x coordinate of the inner circumferential surface 6a of the sidewall portion 6 modeled in this manner was calculated when the three-dimensional non-steady state heat transfer inverse problem analysis was performed as explained in this embodiment and when the one-dimensional non-steady state heat transfer inverse problem was performed.

The worn-out portion 92 was assumed to be formed at the center of the y-z plane of the model, and the lengths $WL_x$, $WL_y$, and $WL_z$ of the worn-out portion 92 in the respective directions were set to 0.14 m, 0.2 m, and 0.2 m ($WL_x = 0.14$, $WL_y = WL_z = 0.2$), respectively. Further, a height (length in the height direction (z-axis direction)) ZB, a width (length in the circumferential direction (y-axis direction)) YB, and a thickness (length in the thickness direction (x-axis direction)) XB of the modeled sidewall portion 6 were set to 1 m, 1 m, and 0.46 m (ZB = YB = 1, XB = 0.46), respectively. Further, a distance $\Delta x_{in}$ in the thickness direction (x-axis direction) from the outer circumferential surface 6b of the modeled sidewall portion 6 to the inner optical fiber 121 was set to 0.14 m ($\Delta x_{in} = 0.14$), and further, a distance $\Delta x_{out}$ in the thickness direction (x-axis direction) from the outer circumferential surface 6b of the modeled sidewall portion 6 to the outer optical fiber 122 was set to 0.04 m ($\Delta x_{out} = 0.04$). Then, the distances $\Delta y_1$ and $\Delta y_2$ illustrated in Fig. 8A and Fig. 8B were each set to 0.05 m ($\Delta y_1 = \Delta y_2 = 0.05$). That is, the distances $\Delta y_1$ and $\Delta y_2$ were set to 1/4 of the width $WL_y$ of the worn-out portion 92. Further, the distances $\Delta z_1$ and $\Delta z_2$ illustrated in Fig. 8A and Fig. 8B were each set to 0.05 m ($\Delta z_1 = \Delta z_2 = 0.05$). That is, the distances $\Delta z_1$ and $\Delta z_2$ were set to 1/4 of the height $WL_z$ of the worn-out portion 92.

Under the above conditions, the temperatures of the sidewall portion 6 in the thickness direction (x-axis direction) at the y coordinate and the z coordinate of the hot spot centroid positions 81a and 82a were calculated. In this case, the temperature measurement period was set to 0.01 Hr. Further, the number of temperature measurement times m was set to 50 (m = 50). Further, as a model parameter for the non-steady state heat transfer inverse problem, the time shift T (see (1) Equation) was set to 35 Hr. Further, the regularization coefficient $\gamma$ (see (6) Equation) was set to 0.00000000001 ($\gamma = 0.00000000001$). Incidentally, the model parameter for the non-steady state heat transfer inverse problem may be determined according to the degree of unsteadiness.

Further, the temperature of each part of the model was given as a true value. The true values (temperatures) at the temperature measurement points 81a to 81e and 82a to 82e were extracted and the non-steady state heat transfer inverse problem was performed. Incidentally, in the one-dimensional non-steady state heat transfer inverse problem, the temperature measurement point is the two hot spot centroid positions 81a and 82a. The y coordinate and the z coordinate at the position of the center of gravity of the worn-out portion 92 were the y coordinate and the z coordinate of the hot spot centroid positions 81a and 82a. Further, a temperature $T_M$ of the inner circumferential surface 6a was 1665°C ($T_M = 1665$).

Fig. 11A and Fig. 11B are views each illustrating an example of the relationship between a refractory temperature and a refractory thickness direction distance. The refractory temperature is the value (temperature) of the interpolation/extrapolation temperature function u(x, y, z, t) calculated by performing the non-steady state heat transfer inverse problem analysis. The refractory thickness direction distance is the distance in the thickness direction (x-axis direction) from the outer circumferential surface 6b of the model.

Fig. 11A illustrates the results obtained by performing the three-dimensional non-steady state heat transfer inverse problem analysis as explained in this embodiment. Fig. 11B illustrates the results obtained by performing the one-dimensional non-steady state heat transfer inverse problem in the three-dimensional non-steady state heat transfer inverse problem analysis explained in this embodiment, where the heat transfer direction is limited only to the thickness direction.

As described previously, the temperature $T_M$ of the inner circumferential surface 6a was 1665°C ($T_M = 1665$). The refractory thickness direction distance at the temperature $T_M$ (= 1665°C) of the inner circumferential surface 6a is the equivalent refractory length described previously.

As illustrated in Fig. 11A, the calculated value is close to the true value in the method explained in this embodiment. Further, the refractory thickness direction distance at the temperature $T_M$ (= 1665°C) of the inner circumferential surface 6a was 0.323 m. In Fig. 9A and Fig. 9B, the thickness of the sidewall portion 6 at the worn-out portion 92 (= XB - $WL_x$) is 0.32 (= 0.46 - 0.14). It can be seen that as the refractory thickness direction distance (=0.323 m) at the temperature $T_M$ (=1665°C) of the inner circumferential surface 6a, a value close to the thickness (= 0.32 m) of the sidewall portion 6 at the worn-out portion 92a is obtained.

In contrast to this, as illustrated in Fig. 11B, when the one-dimensional non-steady state heat transfer inverse problem analysis was performed, the calculated value was lower than the true value. Further, the refractory thickness direction distance at the temperature $T_M$ (= 1665°C) of the inner circumferential surface 6a was 0.371 m, which was significantly different from the true value (= 0.32 m).

As above, the results of comparison between Fig. 11A and Fig. 11B reveal that unless heat transfers in the y-axis direction and the z-axis direction are considered, there is a risk that the accuracy of calculating the position of the inner circumferential surface in the thickness direction may decrease, whereas considering heat transfers in the y-axis direction and the z-axis direction as in this embodiment makes it possible to improve the accuracy of calculating the position of the inner circumferential surface 6a in the thickness direction. Further, Fig. 11A reveals that using the thermal diffusivity of the precast block 9 as the thermal diffusivity (the square root of $\alpha$) included in the interpolation/extrapolation temperature function u(x, y, z, t) makes it possible to calculate the position of the inner circumferential surface 6a in the thickness direction with high accuracy without using the thermal diffusivities of other members.

<Hardware>

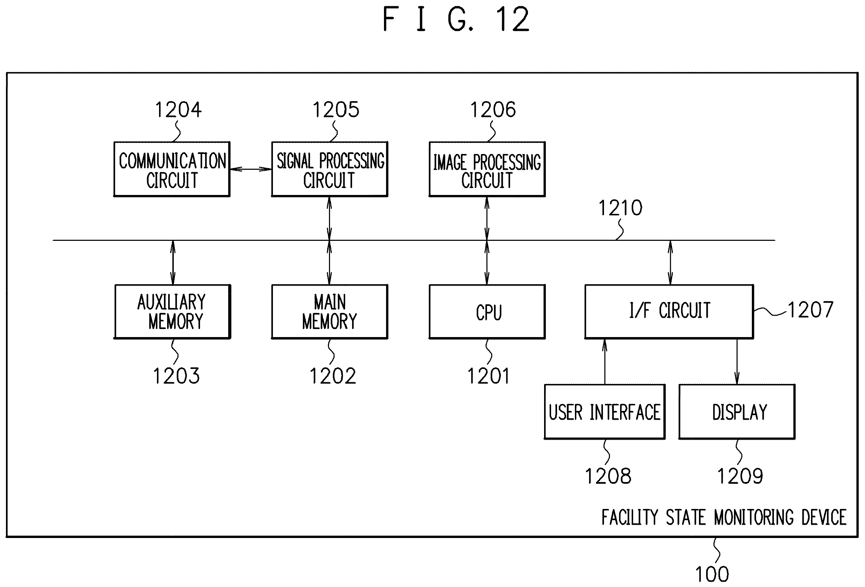

Next, there is explained an example of hardware of the facility state monitoring device 100. In Fig. 12, the facility state monitoring device 100 includes a CPU 1201, a main memory 1202, an auxiliary memory 1203, a communication circuit 1204, a signal processing circuit 1205, an image processing circuit 1206, an I/F circuit 1207, a user interface 1208, a display 1209, and a bus 1210.

The CPU 1201 overall controls the entire facility state monitoring device 100. The CPU 1201 uses the main memory 1202 as a work area to execute a program stored in the auxiliary memory 1203. The main memory 1202 stores data temporarily. The auxiliary memory 1203 stores various data, in addition to programs to be executed by the CPU 1201.

The communication circuit 1204 is a circuit intended for performing communication with the outside of the facility state monitoring device 100. The communication circuit 1204 may perform radio communication or may perform wire communication with the outside of the facility state monitoring device 100.

The signal processing circuit 1205 performs various pieces of signal processing on signals received in the communication circuit 1204 and signals input according to the control by the CPU 1201.

The image processing circuit 1206 performs various pieces of image processing on signals input according to the control by the CPU 1201. The signal that has been subjected to the image processing is output on the display 1209, for example.

The user interface 1208 is a part through which an operator gives instructions to the facility state monitoring device 100. The user interface 1208 includes, for example, buttons, switches, dials, and so on. Further, the user interface 1208 may also include a graphical user interface using the display 1209.

The display 1209 displays an image based on the signal output from the image processing circuit 1206. The I/F circuit 1207 exchanges data with a device connected to the I/F circuit 1207. Fig. 12 illustrates the user interface 1208 and the display 1209 as the device to be connected to the I/F circuit 1207. However, the device to be connected to the I/F circuit 1207 is not limited to these devices. For example, a portable storage medium may be connected to the I/F circuit 1207. Further, at least a part of the user interface 1208 and the display 1209 may be provided outside the facility state monitoring device 100.

Incidentally, the CPU 1201, the main memory 1202, the auxiliary memory 1203, the signal processing circuit 1205, the image processing circuit 1206, and the I/F circuit 1207 are connected to the bus 1210. The communication among these components is performed via the bus 1210. Further, the hardware of the facility state monitoring device 100 is not limited to the hardware illustrated in Fig. 12 as long as it can perform the functions of the facility state monitoring device 100. For example, a GPU may be used as a processor instead of or in addition to the CPU 1201. Further, the hardware of the facility state monitoring device 100 is also fabricated, for example, by the same hardware as that of the facility state monitoring device 100 illustrated in Fig. 12. Therefore, a detailed explanation of a specific example of the hardware of the facility state monitoring device 100 is omitted here.

<Summary>

As above, in this embodiment, in the electric arc furnace 1, which is an example of the facility in which molten metal is present during operation, the inner circumferential surface 6a of the sidewall portion 6 is formed of a refractory. Further, the optical fibers 121 to 122 included in the optical fiber temperature sensors 111 and 112 are embedded in the member that forms the sidewall portion 6. Therefore, as the temperature of the sidewall portion 6, temperatures in a wider range can be measured.

Further, in this embodiment, the precast block 9 is used as the member that forms the sidewall portion 6. The precast block 9 is a fire-resistant block fabricated by a monolithic refractory being precast with the optical fibers 121 to 122 embedded therein. Therefore, this makes it easier to install the optical fibers 121 to 122. Further, it is possible to inhibit variations from occurring in temperature measurement errors caused by the optical fiber temperature sensors 111 to 112.

Further, in this embodiment, the facility state monitoring device 100 calculates the temperature distribution of the sidewall portion 6 in the thickness direction by performing the three-dimensional non-steady state heat transfer inverse problem analysis based on the measured values of the optical fiber temperature sensors 111 to 112. Then, the facility state monitoring device 100 calculates, as the position of the inner circumferential surface 6a, the position, including the position of the sidewall portion 6 in the thickness direction, based on the temperature distribution of the sidewall portion 6 in the thickness direction. Therefore, the state of the inner circumferential surface 6a can be monitored easily with high accuracy. Further, even when molten metal or the like is present in the furnace, the state of the inner circumferential surface 6a can be monitored.

Further, in this embodiment, the facility state monitoring device 100 acquires five temperatures per place of the sidewall portion 6 in the thickness direction as the temperature required for calculating a single position of the inner circumferential surface 6a in the thickness direction. Therefore, the number of temperatures to be used when performing the three-dimensional non-steady state heat transfer inverse problem analysis can be optimized.

Further, in this embodiment, the facility state monitoring device 100 acquires the temperatures at the hot spot centroid positions 81a and 82a. Therefore, it is possible to consider heat transfers in three-dimensional respective directions in the region including the hot spot.

Further, in this embodiment, the facility state monitoring device 100 performs the three-dimensional non-steady state heat transfer inverse problem analysis using only the physical property value (thermal diffusivity) of the precast block 9 among the physical property values (thermal diffusivities) of the members that form the sidewall portion 6. Therefore, it is possible to prevent the non-steady state heat transfer inverse problem from becoming a complicated problem. Further, it is possible to prevent a decrease in the calculation accuracy caused by introducing assumptions about phenomena that are difficult to estimate into the non-steady state heat transfer inverse problem.

Further, in this embodiment, the optical fiber temperature sensor 111, which measures the temperature at a relatively inner position, and the optical fiber temperature sensor 112, which measures the temperature at a relatively outer position, are designed to be separate temperature sensors. This makes it easier to install the optical fiber temperature sensors 111 to 112.

Further, in this embodiment, the precast block 9 with the optical fibers 121 and 122 embedded therein is installed in a partial region of the region where the permanent brick 8 is installed. This makes it possible to prevent wear of the precast block 9.

(Other modified examples)

Incidentally, the embodiment of the present disclosure explained above can be implemented by causing a computer to execute a program. Further, a computer-readable recording medium in which the aforementioned program is recorded and a computer program product such as the aforementioned program can also be applied as the embodiment of the present disclosure. As the recording medium, it is possible to use a flexible disk, a hard disk, an optical disk, a magneto-optic disk, a CD-ROM, a magnetic tape, a nonvolatile memory card, a ROM, or the like, for example.

Further, the embodiment of the present disclosure explained above merely illustrates concrete examples of implementing the present disclosure, and the technical scope of the present disclosure is not to be construed in a restrictive manner by the embodiment. That is, the present disclosure may be implemented in various forms without departing from the technical spirit or main features thereof.

INDUSTRIAL APPLICABILITY

The present disclosure can be utilized for a facility in which molten metal is present during operation, for example.

**Claims**

1.  A facility in which molten metal is present during operation, wherein

    an inner circumferential surface of a sidewall portion of the facility is formed of a refractory, and
    an optical fiber included in an optical fiber temperature sensor is embedded in a member forming the sidewall portion.

2.  The facility according to claim 1, wherein
    of the member forming the sidewall portion, a member in which the optical fiber is embedded is a fire-resistant block fabricated by a monolithic refractory being precast with the optical fiber embedded therein.

3.  The facility according to claim 1 or 2, comprising:

a temperature sensor that measures a temperature at a position of the sidewall portion on a relatively inner circumferential surface side; and

a temperature sensor that measures a temperature at a position of the sidewall portion on a relatively outer circumferential surface side, wherein

the temperature sensor that measures the temperature at the position of the sidewall portion on the relatively inner circumferential surface side is the optical fiber temperature sensor.

4. The facility according to claim 3, wherein
the temperature sensor that measures the temperature at the position of the sidewall portion on the relatively outer circumferential surface side is the optical fiber temperature sensor.

5. The facility according to any one of claims 1 to 4, wherein
the member is present on the outer circumferential surface side of the sidewall portion relative to the refractory that forms the inner circumferential surface of the sidewall portion.

6. A facility state monitoring device that monitors a state of the facility according to any one of claims 1 to 5, the device comprising:

an inverse problem analysis means that calculates a temperature distribution of the sidewall portion by performing a three-dimensional non-steady state heat transfer inverse problem analysis based on a measured value of a temperature sensor that measures a temperature of the sidewall portion; and

a refractory position calculation means that calculates a position of the inner circumferential surface based on the temperature distribution calculated by the inverse problem analysis means, wherein

the inverse problem analysis means calculates a temperature distribution of the sidewall portion in a thickness direction,

the position of the inner circumferential surface to be calculated by the refractory position calculation means includes a position of the sidewall portion in the thickness direction,

the temperature sensor measures a temperature at a position of the sidewall portion on a relatively inner circumferential surface side and a temperature at a position of the sidewall portion on a relatively outer circumferential surface side in a portion of the sidewall portion that is different from the inner circumferential surface of the sidewall portion, and

the temperature sensor that measures at least the temperature at the position of the sidewall portion on the relatively inner circumferential surface side out of the temperature at the position of the sidewall portion on the relatively inner circumferential surface side and the temperature at the position of the sidewall portion on the relatively outer circumferential surface side is the optical fiber temperature sensor.

7. The facility state monitoring device according to claim 6, wherein
of a member forming the sidewall portion, a member in which the optical fiber is embedded is a fire-resistant block fabricated by a monolithic refractory being precast with the optical fiber embedded therein.

8. The facility state monitoring device according to claim 6 or 7, wherein
the temperature sensor that measures the temperature at the position of the sidewall portion on the relatively inner circumferential surface side and the temperature at the position of the sidewall portion on the relatively outer circumferential surface side is an optical fiber temperature sensor including an optical fiber embedded in the member forming the sidewall portion.

9. The facility state monitoring device according to any one of claims 6 to 8, wherein

the inverse problem analysis means acquires N temperatures per place of the sidewall portion in the thickness direction as temperatures required for calculating a single position of the inner circumferential surface of the sidewall portion in the thickness direction based on a measured value of the temperature sensor, and calculates a temperature distribution of the sidewall portion in the thickness direction by performing a three-dimensional non-steady state heat transfer inverse problem analysis based on the N temperatures, and

N is an integer of two or more.

10. The facility state monitoring device according to claim 9, wherein
N is five.

11. The facility state monitoring device according to any one of claims 6 to 10, wherein
the inverse problem analysis means acquires a temperature in a hot spot region including a position at which temperature is locally maximum based on a measured value of the temperature sensor, and calculates a temperature distribution of the sidewall portion in the thickness direction by performing a three-dimensional non-steady state heat transfer inverse problem analysis based on the acquired temperature.

12. The facility state monitoring device according to any one of claims 6 to 11, wherein
the inverse problem analysis means performs the three-dimensional non-steady state heat transfer inverse problem analysis using, out of physical property values of the member forming the sidewall portion, only the physical property value of the member in which the temperature sensor is embedded.

13. A facility state monitoring method that monitors a state of the facility according to any one of claims 1 to 5, the method comprising:

an inverse problem analysis step that calculates a temperature distribution of the sidewall portion by performing a three-dimensional non-steady state heat transfer inverse problem analysis based on a measured value of a temperature sensor that measures a temperature of the sidewall portion; and
a refractory position calculation step that calculates a position of the inner circumferential surface based on the temperature distribution calculated by the inverse problem analysis step, wherein
the inverse problem analysis step calculates a temperature distribution of the sidewall portion in a thickness direction,
the position of the inner circumferential surface to be calculated in the refractory position calculation step includes a position of the sidewall portion in the thickness direction,
the temperature sensor measures a temperature at a position of the sidewall portion on a relatively inner circumferential surface side and a temperature at a position of the sidewall portion on a relatively outer circumferential surface side in a portion of the sidewall portion that is different from the inner circumferential surface of the sidewall portion, and
out of the temperature at the position of the sidewall portion on the relatively inner circumferential surface side and the temperature at the position of the sidewall portion on the relatively outer circumferential surface side, is at least the optical fiber temperature sensor.

14. A program for causing a computer to function as each means of the facility state monitoring device according to any one of claims 6 to 12.

# F I G. 1

OUTER SIDE ←→ INNER SIDE          INNER SIDE ←→ OUTER SIDE

# F I G. 2

# F I G. 3

# F I G. 4A

INNER SIDE　　　OUTER SIDE

41a　　　　　　41b

41c　　　　　　41d

41e　　　　　　41f

x ← ⊙ z
↓
y

# F I G. 4B

INNER SIDE　　　OUTER SIDE

41g　　　　　　41h

41i　　　　　　41j

41k　　　　　　41ℓ

z
↑
x ← ⊙
y

# F I G. 5A

INNER SIDE     OUTER SIDE

51a          51b

51c          51d

51e          51f

x ← ⊙ z
    y

# F I G. 5B

INNER SIDE     OUTER SIDE

51g          51h

51i          51j

51k          51ℓ

z
x ← ⊙
    y

# F I G. 6

TEMPERATURE ACQUISITION PART 〜61

INVERSE PROBLEM ANALYSIS PART 〜62

REFRACTORY POSITION CALCULATION PART 〜63

OUTPUT PART 〜64

FACILITY STATE MONITORING DEVICE

100

# F I G. 7

71

z COORDINATE

y COORDINATE

z
↑
x ⊙ → y

525
500
475
450
425
400
375
350
325

# F I G. 8A

# F I G. 8B

# F I G. 9A

# F I G. 9B

# F I G. 10

```
┌─────────────┐
│    START    │
└─────────────┘
        │
        ▼
┌─────────────────────────────────────────────────┐
│   ACQUIRE MEASURED VALUES OF TEMPERATURE         │───── S1001
└─────────────────────────────────────────────────┘
        │
        ▼
┌─────────────────────────────────────────────────┐
│ CALCULATE TEMPERATURES AT TEMPERATURE MEASUREMENT POINTS │───── S1002
└─────────────────────────────────────────────────┘
        │
        ▼
┌─────────────────────────────────────────────────┐
│         CALCULATE WEIGHTING COEFFICIENT OF       │───── S1003
│   INTERPOLATION/EXTRAPOLATION TEMPERATURE FUNCTION│
└─────────────────────────────────────────────────┘
        │
        ▼
┌─────────────────────────────────────────────────┐
│     CALCULATE VALUE OF INTERPOLATION/EXTRAPOLATION│───── S1004
│              TEMPERATURE FUNCTION                │
└─────────────────────────────────────────────────┘
        │
        ▼
┌─────────────────────────────────────────────────┐
│  CALCULATE TEMPERATURE DISTRIBUTION IN THICKNESS DIRECTION │───── S1005
└─────────────────────────────────────────────────┘
        │
        ▼
┌─────────────────────────────────────────────────┐
│      CALCULATE POSITION OF INNER CIRCUMFERENTIAL  │───── S1006
│          SURFACE IN THICKNESS DIRECTION          │
└─────────────────────────────────────────────────┘
        │
        ▼
       S1007
       ╱╲
      ╱  ╲
     ╱ WHETHER OR NOT ╲
    ╱ PROCESSING HAS BEEN PERFORMED ON ╲    NO
    ╲ ALL OF HOT SPOT REGIONS ╱─────────────►
     ╲        ?        ╱
      ╲      ╱
       ╲   ╱
        │ YES
        ▼
┌─────────────────────────────────────────────────┐
│  OUTPUT INNER CIRCUMFERENTIAL SURFACE STATE INFORMATION │───── S1008
└─────────────────────────────────────────────────┘
        │
        ▼
┌─────────────┐
│     END     │
└─────────────┘
```

# F I G. 11A

# F I G. 11B

# F I G. 12

## INTERNATIONAL SEARCH REPORT

| International application No. |
| --- |
| **PCT/JP2024/010726** |

### A. CLASSIFICATION OF SUBJECT MATTER

*F27D 1/00*(2006.01)i; *F27D 21/00*(2006.01)i
FI:  F27D1/00 V; F27D21/00 Q

According to International Patent Classification (IPC) or to both national classification and IPC

### B. FIELDS SEARCHED

Minimum documentation searched (classification system followed by classification symbols)

F27D1/00; F27D21/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2002-039690 A (NIPPON STEEL CORPORATION) 06 February 2002 (2002-02-06) entire text, all drawings | 1-14 |
| A | JP 4-074813 A (SUMITOMO METAL INDUSTRIES, LTD.) 10 March 1992 (1992-03-10) entire text, all drawings | 1-14 |
| A | JP 63-127076 A (PLIBRICO JAPAN CO., LTD.) 30 May 1988 (1988-05-30) entire text, all drawings | 1-14 |
| A | CN 105241576 A (MAANSHAN AHUT INDUSTRIAL TECHNOLOGY RESEARCH INSTITUTE CO., LTD.) 13 January 2016 (2016-01-13) entire text, all drawings | 1-14 |

☐ Further documents are listed in the continuation of Box C.        ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **27 May 2024** | **04 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

### INTERNATIONAL SEARCH REPORT
**Information on patent family members**

International application No.

**PCT/JP2024/010726**

| Patent document cited in search report | | | Publication date (day/month/year) | Patent family member(s) | Publication date (day/month/year) |
|---|---|---|---|---|---|
| JP | 2002-039690 | A | 06 February 2002 | (Family: none) | |
| JP | 4-074813 | A | 10 March 1992 | (Family: none) | |
| JP | 63-127076 | A | 30 May 1988 | (Family: none) | |
| CN | 105241576 | A | 13 January 2016 | (Family: none) | |

Form PCT/ISA/210 (patent family annex) (July 2022)

**EP 4 696 969 A1**

**REFERENCES CITED IN THE DESCRIPTION**

**Patent documents cited in the description**

- JP 2023065494 A
- JP 2001234217 A
- JP 2018185253 A